# EUROPEAN PATENT APPLICATION

(11) **EP 1 939 766 A1**
(43) Date of publication of application: **02.07.2008**
(21) Application number: 07109964.2
(22) Date of filing: 11.06.2007
(51) Int. Cl.: G06F 17/30

(54) **Document management system, document processing client device, and document management server device**

(30) Priority: 18.12.2006 JP 2006340104
(71) Applicant: Fuji Xerox Co., Ltd., Minato-ku, Tokyo (JP)
(72) Inventor: Terao, Taro c/o Fuji Xerox Co., Ltd.,, Kanagawa (JP); Shi, Meng c/o Fuji Xerox Co., Ltd.,, Kanagawa (JP); Miyazaki, Jun c/o Fuji Xerox Co., Ltd.,, Kanagawa (JP); Hattori, Hiroyuki c/o Fuji Xerox Co., Ltd.,, Kanagawa (JP)
(74) Representative: Carpintero Lopez, Francisco

(57) **Abstract**

There is provided a document management system including a document storage that stores an electronic document and a content identifier; a management information storage that stores management information, which includes a content identifier of an electronic document and a management identifier of a parent document of the electronic document, and a management identifier of the electronic document *;* an obtaining unit that obtains management information corresponding to a requested management identifier from the management information storage and obtains from the document storage a first electronic document corresponding to a content identifier in the obtained management information; and a print management unit that registers management information, of a medium document which is a printed result of the first electronic document, which includes a management identifier of the first electronic document and a management identifier of the medium document, and that writes the management identifier of the medium document on the medium document,

## Description

### BACKGROUND

### TECHNICAL FIELD

The present invention relates to a document management system, a document processing client device, and a document management server device.

### RELATED ART

In the field of document management, traceability of documents which are in circulation is under consideration. For example, some systems which manage electronic data; that is, document data created by computer software, have functions to ask for information related to circulation routes of an electronic document such as, for example, who downloaded the electronic document and who provided the electronic document to whom.

The following references are known as being related to the traceability of a document.
[Patent Document 1] JP 11-249777 A
[Patent Document 2] JP 11-259459 A
[Patent Document 3] JP 2004-072343 A
[Patent Document 4] JP 2004-102627 A
[Patent Document 5] JP 2005-035095 A

However, when an electronic document is printed on a physical medium such as paper or when an electronic document is created by reading a document printed on a physical medium such as a paper document, the systems of the related art may be insufficient for tracing a parent-child relationship (derivation relationship) among documents.

### SUMMARY

According to an aspect of the invention, there is provided a document management system including a document storage that stores an electronic document and a content identifier of the electronic document in correspondence to each other, the content identifier of the electronic document being a hash value of a content of the electronic document; a management information storage that stores management information, which includes a content identifier of an electronic document and a management identifier of a parent document of the electronic document, and a management identifier of the electronic document in correspondence to each other, the management identifier of the electronic document being a hash value of the management information; an obtaining unit that obtains, on the basis of an obtaining instruction designating a management identifier, management information corresponding to the management identifier from the management information storage and obtains from the document storage a first electronic document corresponding to a content identifier included in the obtained management information; and a print management unit that registers, in response to a print instruction for the first electronic document obtained by the obtaining unit, management information, of a medium document which is a printed result of the print instruction, which includes a management identifier of the first electronic document and a management identifier of the medium document in correspondence to each other, the management identifier of the medium document being a hash value of the management information of the medium information, and that writes the management identifier of the medium document on the medium document.

According to an aspect of the invention, the document management system further includes a registering unit that registers, when an operation is executed on the first electronic document obtained by the obtaining unit and a second electronic document is created, the second electronic document in the document storage in correspondence to a content identifier of the second electronic document and that registers management information including the content identifier of the second electronic document and the management identifier of the first electronic document in the management information storage in correspondence to a management identifier of the second electronic document which is a hash value of the management information.

According to an aspect of the invention, the print management unit registers print image data indicating an image to be printed on the medium in the document storage in correspondence to a content identifier which is a hash value of the print image data, and registers management information which further includes the content identifier in the management information storage as the management information of the medium document.

According to an aspect of the invention, the document management system further includes a read management unit that recognizes, in response to execution of a read operation on a medium document, a management identifier written on the medium document, creates management information including the management identifier of the medium document as management information of an electronic document obtained as a result of the read operation, registers the electronic document in the document storage in correspondence to a content identifier which is a hash value of the electronic document, and registers the management information in the management information storage in correspondence to a management identifier which is a hash value of the management information.

According to an aspect of the invention, the document management system further includes a copy management unit that recognizes, in response to execution of a copy operation on a first medium document, a management identifier written on the first medium document, creates management information including a management identifier of the first medium document as management information of a second medium document obtained as a result of the copy operation, registers the management information in the management information storage in correspondence to a second management identifier which is a hash value of the management information, and writes the second management identifier on the second medium document.

According to an aspect of the invention, the copy management unit registers image data obtained by reading the first medium document in the document storage in correspondence to a content identifier which is a hash value of the image data, and registers management information, which further includes the content identifier, in the management information storage as the management information of the second medium document.

According to an aspect of the invention, the document management system further includes a discard management unit that recognizes, in response to execution of a discard operation of a medium document, a management identifier written on the medium document, creates management information including the management identifier of the medium document as management information indicating discarding of the medium document, and registers the management information in the management information storage in correspondence to a management identifier which is a hash value of the management information.

According to an aspect of the invention the discard management unit registers image data obtained by reading the medium document in the document storage in correspondence to a content identifier which is a hash value of the image data, and registers management information, which further includes the content identifier, in the management information storage as the management information of the medium document.

According to an aspect of the invention, there is provided a document management server device including a document storage that stores an electronic document and a content identifier of the electronic document in correspondence to each other, the content identifier of the electronic document being a hash value of a content of the electronic document; a management information storage that stores management information, which includes a content identifier of an electronic document and a management identifier of a parent document of the electronic document, and a management identifier of the electronic document in correspondence to each other, the management identifier of the electronic document being a hash value of the management information; an identifier resolving unit that provides, when a resolving request presenting a management identifier is received from a document processing client device, management information corresponding to the management identifier from the management information storage to the document processing client device, and provides to the document processing client device, when a resolving request presenting a content identifier is received from the document processing client device, an electronic document corresponding to the content identifier; and a medium information storage processor that stores, when a registering request including management information and a management identifier of a medium document is received from the document processing client device, the management information in the management information storage in correspondence to the management identifier.

According to an aspect of the invention, the document management system further includes a content storage processor that stores, when a registering request including an electronic document and a content identifier is received from the document processing client device, the electronic document in the document storage in correspondence to the content identifier; and a management information storage processor that stores, when a registering request including management information and a management identifier of an electronic document is received from the document processing client device, the management information in the management information storage in correspondence to the management identifier.

According to an aspect of the invention, the document management system further includes a list-recording unit that records a list of an identifier of a second document management server device to be notified; a transmitting unit that transmits, when a registering request including an electronic document and a content identifier is received from a document processing client device, a registering request, which includes the content identifier and an identifier of the document management server device, to the second document management server device recorded in the list-recording unit, and transmits, when a registering request including management information and a management identifier is received from the document processing client device, a registering request, which includes the management identifier and the identifier of the document management server device, to the second document management server device recorded in the list-recording unit; a first registration processor that registers, when a registering request including a content identifier and an identifier of a third document management server device is received from the third document management server device, the content identifier and an identifier of the third document management server device in the document storage and forwards the registering request to the second document management server device recorded in the list-recording unit; a second registration processor that registers, when a registering request including a management identifier and the identifier of the third document management server device is received from the third document management server device, the management identifier and the identifier of the third document management server device in the management information storage and forwards the registering request to the second document management server device recorded in the list-recording unit; a first resolve processor that obtains, when a resolving request presenting a content identifier is received and information stored in the document storage in correspondence to the content identifier is an identifier of a document management server device, an electronic document corresponding to the content identifier from the document management server device corresponding to the identifier, and returns the obtained electronic document to a device issuing the resolving request; and a second resolve processor that obtains, when a resolving request presenting a management identifier is received and information stored in the management information storage in correspondence to the management identifier is an identifier of a document management server, management information corresponding to the management identifier from a document management server device corresponding to the identifier, and returns the obtained management information to a device issuing the resolving request.

According to one aspect of the present invention, a parent-child relationship (derivation relationship) with respect to electronic documents can be managed for a medium document printed on a physical medium such as paper.

### BRIEF DESCRIPTION OF THE DRAWINGS

Exemplary embodiment(s) of the present invention will be described in detail by reference to the following figures, wherein:
Fig. 1 is a diagram schematically showing a structure of a document management system;
Fig. 2 is a diagram showing an example internal structure of a document management server;
Fig. 3 is a diagram showing example data content of a document management database (DB);
Fig. 4 is a diagram showing example data content of a derivation relationship database (DB);
Fig. 5 is a diagram for explaining a relationship among an electronic document, meta information, and a reference information file;
Fig. 6 is a diagram showing an example internal structure of a client device;
Fig. 7 is a flowchart showing an example procedure of a "bind" process;
Fig. 8 is a flowchart showing an example procedure of a "resolve" process;
Fig. 9 is a flowchart showing an example procedure of an "exist?" process;
Fig. 10 is a flowchart showing an example procedure of a "delete" process;
Fig. 11 is a flowchart showing an example procedure of a creation process of a reference information file corresponding to an electronic document;
Fig. 12 is a flowchart showing an example procedure of a creation process of a reference information file corresponding to a folder;
Fig. 13 is a flowchart showing an example procedure of an operation to output an electronic document;
Fig. 14 is a flowchart showing an example procedure of an operation on a folder;
Fig. 15 is a flowchart showing an example procedure when printing of an electronic document is instructed;
Fig. 16 is a flowchart showing another example procedure when printing of an electronic document is instructed;
Fig. 17 is a flowchart showing an example procedure when copying of a paper document is instructed;
Fig. 18 is a flowchart showing an example procedure when scanning of a paper document is instructed;
Fig. 19 is a flowchart showing an example procedure when discarding of a paper document is instructed;
Fig. 20 is a flowchart showing an example procedure when display of a derivation relationship is instructed;
Fig. 21 is a diagram showing an example display image of a derivation relationship;
Fig. 22 is a diagram showing an example internal structure of individual document management server when a distributed server structure with plural servers is employed;
Fig. 23 is a flowchart showing an example process executed by a server when the server receives a "resolve" message in a distributed server structure;
Fig. 24 is a flowchart showing an example process executed by a server when the server receives an "exist?" message in a distributed server structure; and
Fig. 25 is a diagram showing an example hardware structure of a computer.

### DETAILED DESCRIPTION

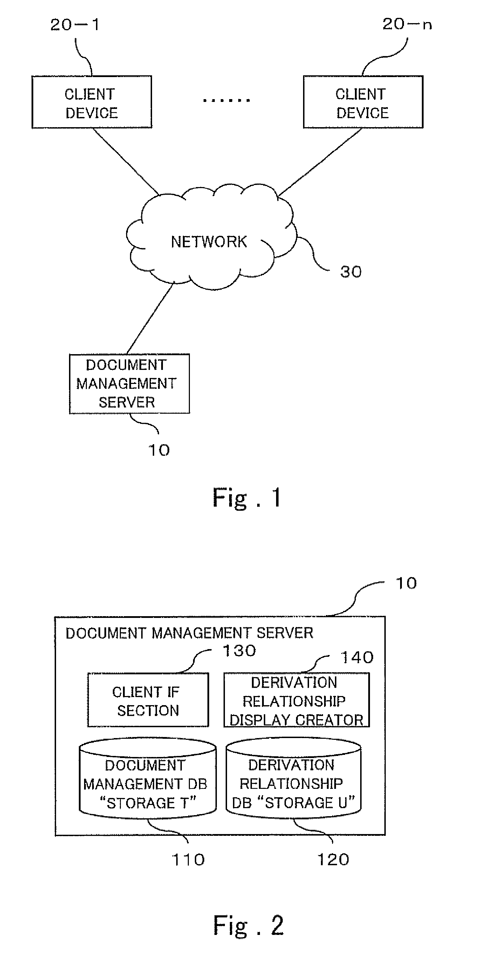

Fig. 1 is a block diagram showing an example structure of a document management system. This system comprises a document management server 10 (hereinafter simply referred to as a "server" 10) connected via a network 30 such as the Internet or a local area network, and client devices (hereinafter simply referred to as "clients") 20-1, 20-2, .... Each of the client devices 20-1, 20-2, will hereinafter be referred to as "client" 20 when it is not necessary to distinguish between the clients.

The server 10 is a device which manages distributed documents in the present system. The server 10 manages both an electronic document and a paper document. The electronic document is an electronic document file created by an application program. The paper document is a document in which contents of the electronic document are printed on a physical medium such as paper. The physical medium is not limited to paper, so long as an image can be retained on a surface of the medium. In this description, documents created by forming an image on a physical medium are collectively referred to as "paper documents", in order to facilitate understanding. The server 10 has, for example, as shown in Fig. 2, a document management DB (database) 110 (which is also referred to as "storage T"), a derivation relationship DB 120 (which is also referred to as "storage U"), a client IF (interface) section 130, and a derivation relationship display creator 140.

The document management DB 110 stores an electronic document in correspondence with a hash value of the electronic document. The document management DB 110 also stores meta information of an electronic document or a paper document in correspondence with a hash value of the meta information. The meta information of the document includes various pieces of information for managing the document. The hash value functions as a search key of the electronic document or the meta information in the document management DB 110. A collision-resistant cryptographical hash function such as SHA-256 (which is a cryptographical hash function having a hash value of 256 bits defined by NIST in FIPS180-2) can be used to create a hash value which can be assumed to be substantially unique, based on the electronic document or on the meta information.

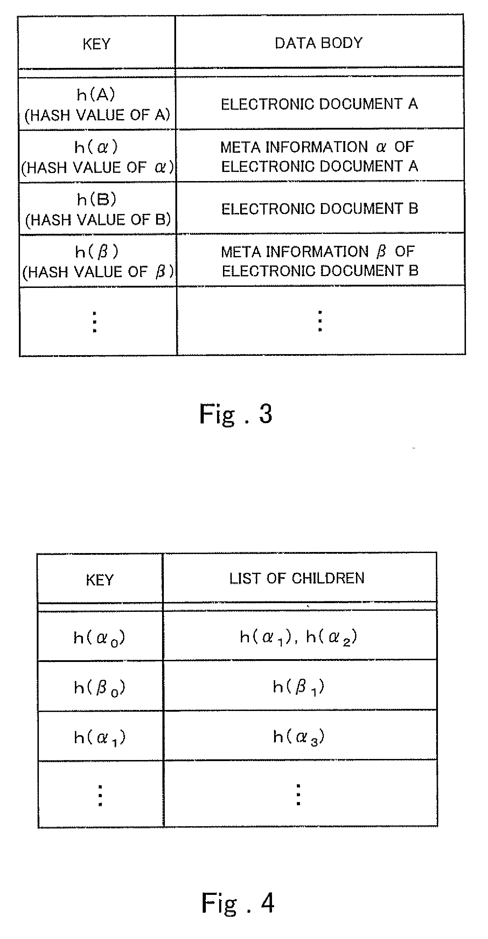

Fig. 3 shows example data content stored in the document management DB 110. As shown, for example, an electronic document A is stored in the document management DB 110 with a hash value h (A), which is obtained by applying a hash function h to the content of the electronic document A, serving as a key. Meta information α of the electronic document A is stored in the document management DB 110 with the hash value h(α) of the meta information α serving as a key.

In the present exemplary embodiment, a hash value of meta information of a document is used as an identifier of the document (hereinafter referred to as "document identifier"). In other words, in the present exemplary embodiment, because the meta information would differ when environments in creation of the document (such as, for example, type of operation and user instructing the operation) differ even when the contents of the documents are identical, the document identifiers for the created documents would differ from each other.

Next, the meta information of the document will be described in more detail. An example of meta information of an electronic document is shown below. This example corresponds to an example case in which meta information is described as an XML (extensible Markup Language) document.

### [Example of Meta Information for Electronic Document]

```
 <doc>
  <base>"base"</base>
  <body>"body"</body>
  <info>
    <user>"user"</user>
    <time>"time"</time>
    <method>"method"</method>
    <content-type>"content-type"</content-type>
  </info>
 </doc>
```

The exemplified meta information doc includes a <base> element, a <body> element, and an <info> element. The <info> element includes a <user> element, a <time> element, a <method> element, and a <content-type> element.

The <body> element is a hash value of the electronic document (for example, the hash value may be coded in hexadecimal). The <base> element is a document identifier of a parent document of the electronic document. When, for example, an editing operation is applied to a certain electronic document A, and an electronic document B is created as a result, the value of the document identifier of the electronic document A is described in the <base> element of the meta information of the electronic document B. When a document is to be newly stored in the document management server 10, because there is no parent document, the <base> element is empty.

The <method> element describes a type of operation applied to the parent document. Specific example types for the value of the <method> element include "read", "edited", "printed", "copied", "scanned", and "shredded". The <user> element is identification information of a user instructing the execution of the operation. The <time> element describes time when the execution of the operation is instructed. The <content-type> element indicates a content type of the electronic document. A content type is information for identifying an application for handling the electronic document such as, for example, PDF (Portable Document File).

Thus, the above-described example meta information is meta information of an electronic document B which is created when a hash value of the electronic document B, obtained as a result of application, on a document A having a document identifier of "base", by a user "user", at a time "time", of an operation "method", is "body" and the content type of the electronic document is "content-type". The hash value of the meta information is set as the document identifier of the electronic document B.

Meta information for an electronic document has been described. Next, meta information for a paper document will be described. Upon execution of an operation in which a paper document is output, such as, for example, printing of an electronic document or copying of a paper document, the meta information corresponding to the output paper document may look, for example, as follows.

### [Example Meta Information for Paper Document]

```
 <doc>
  <base> "base" </base>
  <body> "body" </body>
  <media> "uri" </media>
  <info>
    <user> "user" </user>
    <time> "time" </time>
    <method> "method" </method>
    <content-type> "content-type" </content-type>
    <filename> "filename" </filename>
  </info>
 </doc>
```

In this example meta information, the elements having the same names as those of the elements of the meta information for electronic document exemplified above are elements having the same functions as those in the above-described example meta information for electronic document. The meta information for paper document further includes, as elements unique to paper documents, a <media> element and a <filename> element.

The <media> element is an identifier of a medium of the paper document (hereinafter referred to as "medium identifier").

In the case of meta information for paper document, a result of an operation is a paper document, and there is no electronic document which is a result of the operation. Thus, the <body> element may be empty. Alternatively, it is also possible to employ a configuration in which data representing an image to be printed on the physical medium (such as, for example, bitmap data or page description language data) is set as a temporary operation result, and a hash value of this data is set as the value of the <body> element. The medium identifier may be designated by, for example,

### [Example of Medium Identifier]

```
 "urn:paper:efe3958b4b9da96eea9f4091e4c14ed46c14f620ca947dfa2d4
 169987556f657"
```

This example is an example in which the medium identifier is represented in URN (Uniform Resource Name). The "paper" following "urn:" is a namespace identifier representing a namespace of the paper document. The text string following "urn:paper:" to the end of the identifier is an NSS (Namespace Specific String), and is a text string which uniquely identifies a medium on which the paper document is printed. The NSS in the URN may be some context corresponding to meta information (that is, the hash value of the meta information). For example, a certain paper medium may be uniquely identified by the following XML description.

### [Example Description for Uniquely Identifying Paper Document]

```
 <paper>
  <company>Fuji Xerox Co., Ltd.</company>
  <division>FXPAL Japan Corporate Research Group</division>
  <serialnumber>829536</serialnumber>
  ...
 </paper>
```

In this example case, the description represents a paper medium which is identified by a serial number represented by the <serialnumber> element and other information in a division represented by the <division> element in a company indicated by the <company> element. A hash value of such an XML description identifying a paper document may be used as the NSS of the medium identifier representing the paper medium.

Such information uniquely describing a paper medium may be handled as meta information of the paper medium. In an environment in which a server storing the meta information can be accessed (for example, within a company designated by the <company> element), the origin of the paper document can be known in detail. In an environment in which the NSS cannot be "resolved" (the "resolve" process will be described later in more detail) (for example, outside of the company), the NSS is simply an identifier and information represented by the identifier is hidden. For example, when a paper document printed on paper having the medium identifier has been provided to an outside client company and the company has acquired the client company so that the client company is now a division of the company and can access the server in the company, the user who was in the client company and who is now a employee of the company can use the meta information indicated by the NSS.

The medium identifier may be printed on the medium in the form of, for example, a code image such as a barcode. The printing of the code image may be realized with an invisible ink or toner which can be read with ultraviolet rays or infrared rays. In addition, the medium identifier may be written to an RFID (Radio Frequency IDentifier) tag mounted on the medium. The medium identifier may be printed or written on the medium before printing in advance or may be printed when the printer prints the image on the medium. In the case of the paper medium, a paper fingerprint representing a fine fiber structure or a fine surface structure unique to the individual piece of paper may be read and used as the medium identifier in place of writing the medium identifier on paper as described above.

The <media> element may be filled when the medium identifier can be obtained, and may be empty when the medium identifier cannot be obtained.

A <filename> element in the meta information is an element representing a file name of an electronic document which is a parent document of the paper document. For example, when a paper document is output as a result of an operation on an electronic document such as a case where an electronic document is printed, the file name of the electronic document is recorded as the <filename> element. The file name to be recorded in the <filename> element may be with an extension or without the extension. By recording the file name of the electronic document which is the original of the paper document, the file name can be used when the paper document is again converted to an electronic document, which may be convenient. For example, when a paper document obtained by printing an electronic document is scanned, a name which is derived from the identifier name of the original electronic document may be assigned to the file of the scan result.

In the above description, meta information of documents has been described. It is also possible to similarly define meta information for a folder (or a directory) representing a collection of electronic documents. Meta information for a folder has, as a value of a <body> element, a hash value of a value of a below-described folder content description (that is, a <folder> element) describing a content of the folder.

### [Example of Folder Content Description]

```
 <folder>
  <file
    name="fe04-05515.pdf.yui"
    created="2006/03/10 20:17:16"
    modified="2006/03/10 19:55:03"
    accessed="2006/03/10 20:19:53"
    did="a4cf754a7efdd53825b5a108949ebd764fc3ff7bf6c3c7c25653b
 f824286d38a"
    size="628260" />
  <file
    name="fe02-02232.pdf.yui"
    created="2006/03/10 20:17:13"
    modified="2006/03/10 20:02:00"
    accessed="2006/03/10 20:19:46"
    did="9ff47dc0ca7b68755735b4f415bella380b2e1dalf9a61847dd0b
 524cd22ec8a"
    size="156380"/>
 </folder>
```

This example description represents a folder having two electronic documents including "fe04-05515.pdf" and "fe04-02232.pdf". The <folder> element includes zero or more <file> elements. The <file> element represents management information for an electronic document in the folder. A name attribute in the <file> element indicates a file name of a reference information file corresponding to the electronic document. The reference information file is a file having a document identifier of the electronic document as a content, and is circulated in the system in place of the electronic document itself in the present system. A created attribute, a modified attribute, and an accessed attribute are respectively attributes representing a created time of the electronic document, the most recent time of modification, and the most recent access time. These time attributes may be similar to the information recorded by a normal file system in file management. A did attribute represents a document identifier of the electronic document and a size attribute represents a data size of the electronic document.

A hash value of the meta information for the folder is used as a content identifier of the folder. A file having the folder identifier as its content can be used as the reference information file corresponding to the folder. A user having the reference information file corresponding to the folder can access a server 10 using the reference information file to obtain the content description of the folder as described above. In addition, the user can access the body of the electronic document by accessing the server 10 using the document identifier did of the electronic document included in the folder content description.

For example, when the two documents included in the above-described folder are actual documents of high confidentiality in a certain organization, and the document management system is limited to use by the members of the organization, a member of the organization can access the actual document on the server 10 using the document identifier "did" as described above, whereas a user outside of the organization cannot access any information regarding the document even when the document identifier "did" is made known to the user.

In the above description, a folder has been exemplified. More generally, an arbitrary compound document including plural elements can be handled in a similar manner. For example, in a simple case, an XML document has a tree structure, and each subtree may be considered an XML document, and, thus, an XML document is an example of a compound document. In this case, a document identifier may be assigned to each subtree of the tree structure of the XML document by means of DomHash (which is defined in RFC2803).

The XML documents are becoming the mainstream of a document format having transportability, However, because XML is redundant as a data representation format, the XML format increases necessary data capacity. By using the DomHash value of the XML document as the identifier of the XML document itself as described above, it is possible to avoid storing, in an overlapping manner, overlapping elements. In addition, efficiency of the process can be improved by exchanging only the necessary subtree during a data exchange. Moreover, because DomHash itself stores the tree structure information of the XML document, conversion between an XML document and DOM (Document Object Model) tree, which has been frequently performed in an XML document processing of related art, becomes unnecessary in some respect, and, thus, the efficiency of the process can be further improved.

The document management DB 110 has been described and meta information of documents and folders have been described in relation to the document management DB 110. In the above-described example, both the electronic document and the meta information of the electronic document are stored in the document management DB 110, but the electronic document and the meta information may alternatively be stored in separate databases.

The derivation relationship DB 120 will now be described by referring back to Fig. 2.

The derivation relationship DB 120 is a database which stores derivation relationships among documents stored in the document management DB 110. When an electronic document B is created as a result of an operation on an electronic document A stored in the document management DB 110, it is said that "an electronic document B is derived from an electronic document A". In this case, the electronic document A is a parent of the electronic document B. The parent-child relationship between electronic documents is described herein as a "derivation relationship". The derivation relationship can be represented by a pair of a document identifier of a parent electronic document and a document identifier of a child electronic document.

Fig. 4 shows an example data content stored in the derivation relationship DB 120, In this example, for each electronic document, a list of document identifiers of the child documents derived from the electronic document is registered in the derivation relationship DB 120 in correspondence to the document identifier (key) of the electronic document. As described, the document identifier of the electronic document A is a hash value h(α) of the meta information α of the electronic document A. Because the meta information of the electronic document contains the document identifier of the parent of the electronic document as a <base> element, in principle, the derivation relationships among electronic documents can be determined with only the document management DB 110 storing the meta information. In the present exemplary embodiment, however, from the viewpoint of efficiency of the process, etc., only the derivation relationship from a parent to a child is extracted and collected in the derivation relationship DB 120.

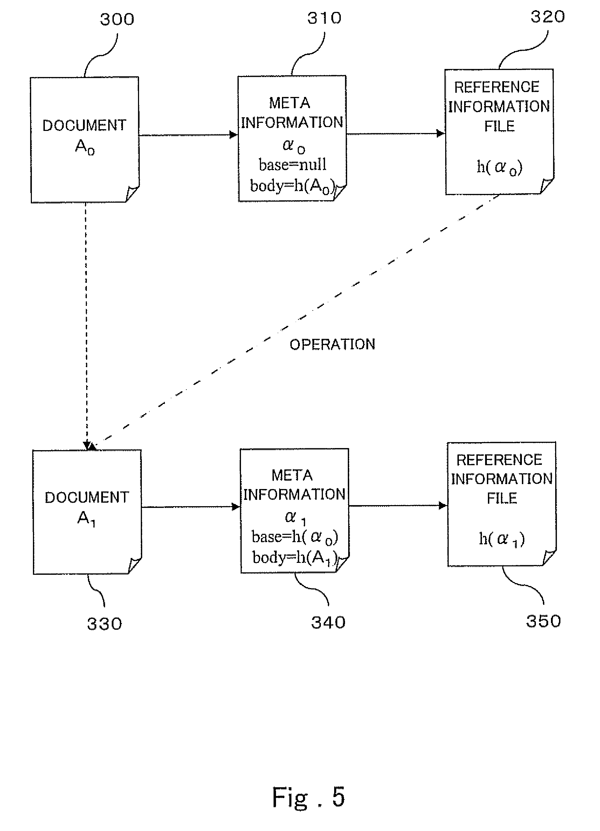

Relationships among the electronic document, meta information, and reference information file in the present exemplary embodiment will now be summarized. As shown in Fig. 5, when an electronic document 300 is newly stored in the document management server 10, meta information 310 having a hash value h(A₀) of the content A₀ of the electronic document 300 as a <body> element is created. In the case of the newly stored document, content of the <base> element is empty. If the content of the meta information 310 is α₀, the document identifier corresponding to the electronic document 300 is h(α₀). A reference information file 320 having the document identifier h(α₀) as a content circulates within the system in place of the electronic document 300. A user who obtained the reference information file 320 can open the reference information file 320 by using a predetermined document processing program provided in the client 20, to thereby obtain the contents of the electronic document 300 from the server 10, and can apply operations such as editing. When, as a result of the operation, the content of the electronic document changes from A₀ to A₁, an electronic document 330 having the content A₁ is stored in the server 10 from the document processing program of the client 20 after the operation. At this time, meta information 340 of the electronic document 330 is also stored in the server 10. The meta information 340 has, as the <base> element representing the parent document, the document identifier h (α₀) of the electronic document 300, and, as the <body> element indicating the document body, a hash value h(A₁) of the electronic document 330. A hash value h(α₁) of a content α₁ of the meta information 340 is set as a document identifier of the electronic document 330, and is included in a reference information file 350 corresponding to the electronic document 330.

The relationship between the document management DB 110 (storage T) and the derivation relationship DB 120 (storage U) as described above may be described as follows. When a cryptographical hash function "h" is selected and an octet string of a free length is called "data," an octet string of a length of the hash value is called "context". When data x and context ξ satisfy h(x) = ξ, the context ξ is said to correspond to data x. The set of all data is described herein as D, and the set of all contexts is described herein as C. The server 10 has the storage T and the storage U. The storage T has the context as a key and data as a value corresponding to the key. The storage U has the context as a key and a set of contexts as a value corresponding to the key. Here, it is assumed that T[ξ] = x (that is, a value in T corresponding to the key ξ is x) and U[ξ] = Y (that is, a value in U corresponding to the key ξ is a set Y). In this case, h(x) = ξ, η is present as a key of T with respect to an arbitrary element η in the set Y, and T[η] is meta information including a <base> element and includes ξ (for example, its hexadecimal representation) as a content of the <base> element. In other words, Y is a set of "children" of ξ.

In the above description, an element of T[η] is set as meta information which is an XML document. Alternatively, it is also possible to set the element of T[η] as a DomHash value corresponding to the XML document of the meta information in place of the XML document. In the case of the XML document, a hexadecimal representation of the context is used. On the other hand, when the DomHash value is used, the context itself may be used. The storage T and the storage U can assume that L is a finite subset of D (in other words, finite language over octets) and that mappings T:h(L) → L and U:h(L) → 2^{c} (that is, when L is sufficiently small (for example, the cardinality of L is at the most 2¹²⁸ in SHA-256), h may be assumed to be injective over L and 2^{c} represents the set of all subsets of C). Based on this fact, h(x) is called "context" of data x. The specific realization of the storages T and U may be given by a hash table, and, thus, a time complexity required for search is 0(1). In addition, there is an advantage that redundant storage of the same data is never created in the storage. In addition, in a case where the server 10 is realized as a distributed server on the network, for example, when the server 10 is based on the distributed hash table such as Chord, the time complexity required for search is O(log n), wherein n is a number of nodes, and the maintenance cost (updating of routing table) of the network is O(log²n), and, thus, such a configuration is very efficient and has a large scalability (the configuration in which the server 10 is realized as a distributed server will be described later in more detail).

The document management DB 110 and the derivation relationship DB 120 of the server 10 have been described. Referring back to Fig. 2, the server 10 has the client IF section 130 for a process for interaction with the client 20. The client IF section 130 communicates with a server IF section 218 of the client device 20 to be described later, to apply basic processes such as "bind", "resolve", "exist?", and "delete". These basic processes will be described later in more detail.

The server 10 also has the derivation relationship display creator 140. The derivation relationship display creator 140 creates derivation relationship display information showing a tree structure of derivation relationship among documents. Processes in the derivation relationship display creator 140 will be described later in more detail.

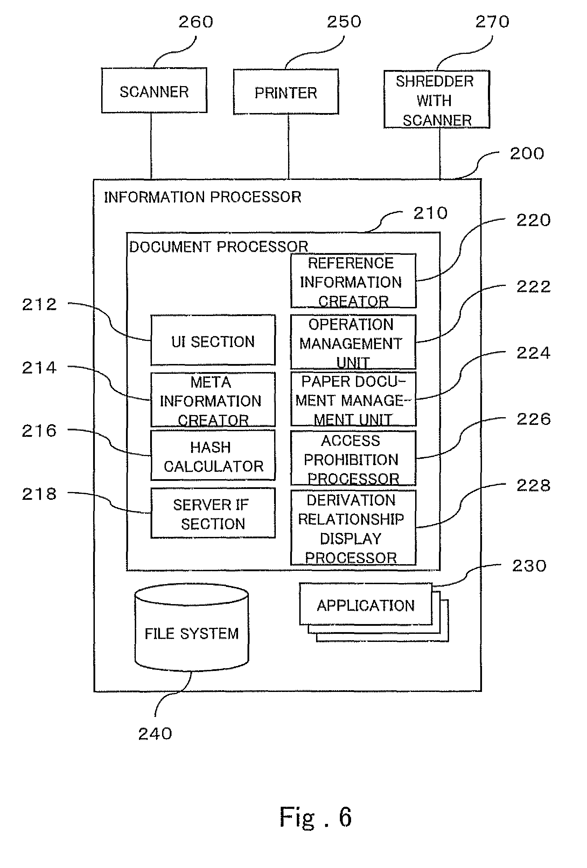

An example structure of the server 10 has been described. Next, an example structure of the client device 20 will be described by reference to Fig. 6.

As shown in Fig. 6, the client 20 has an information processor 200 which includes a document processor 210, one or more applications 230, and a file system 240. The information processor 200 is a computer controlled by an operating system. The document processor 210 is a processing unit which handles and manages documents which use the reference information files as described above, and corresponds to the "document processing program" described above. The information processor 200 will be described later in more detail. The application 230 executes processes on electronic documents such as creation or editing of an electronic document, electronic copying, and an instruction to print. A driver program such as a printer driver which controls a printer 250 and a scanner driver which controls a scanner 260 may also be considered one type of the application 230. The file system 240 is an element of the operating system of the information processor 200, and manages files. The application 230 and the file system 240 are not directly related to the method of the present exemplary embodiment, and an application 230 and a file system 240 of the related art may be used.

The client 20 may have one or more of the printer 250, the scanner 260, and a shredder with scanner 270. The printer 250 and the scanner 260 may be devices of the related art. The shredder with scanner 270 includes a scanner for reading a document identifier code from a paper document. The shredder with scanner 270 will be described later in more detail.

The client 20 of the exemplary embodiment may be a device of various forms. For example, the client 20 may be a device having only the information processor 200 and without the printer 250, the scanner 260, or the shredder with scanner 270. For example, an example of this would correspond to the client 20 being a personal computer. When the client 20 is a digital multifunction device, the client 20 has the information processor 200, the printer 250, and the scanner 260. When the client 20 is a shredder device, the client 20 includes the information processor 200 and the shredder with scanner 270. The client 20 may include a device which handles a paper document other than the printer 250, scanner 260, and shredder with scanner 270.

Next, the document processor 210 will be described. The document processor 210 has a UI (user interface) section 212, a meta information creator 214, a hash calculator 216, the server IF section 218, a reference information creator 220, an operation management unit 222, a paper document management unit 224, an access prohibition processor 226, and a derivation relationship display processor 228.

The UI section 212 creates a UI screen for instruction of operations with respect to the document processor 210 and displays the UI screen on the screen through the operating system of the client 20. On the UI screen provided by the UI section 212, an operation menu for processes related to a reference information file may be displayed, such as, for example, creation of a reference information file, access prohibition process with respect to a reference information file, and derivation relationship display process. The meta information creator 214 creates meta information of the electronic document as described above.

In the course of creation of the meta information, the meta information creator 214 obtains information from the operating system, such as, for example, identification information of the operating user, time of operation, content type, and file name, and obtains a hash value of the electronic document after the operation from the hash calculator 216. A document identifier of the parent document can be obtained from the reference information file which has been opened for the operation. The obtained document identifier of the parent document is incorporated as a value of the <base> element. A reading device equipped on the printer 250, scanner 260, or shredder with scanner 270 may read a code image of a medium identifier written on the medium, a medium identifier stored in an RFID tag attached to the medium, or the paper fingerprint of the medium, and the meta information creator 214 may incorporate the obtained medium identifier in the meta information. When the printer 250 is to print a code image of the medium identifier on paper, the meta information creator 214 may obtain the medium identifier and may incorporate the same into the meta information.

The hash calculator 216 calculates a hash value of target data such as an electronic document and meta information, by using a predetermined cryptographical hash function employed in the present system.

The server IF section 218 communicates with the client IF section 130 of the server 10, and executes basic processes for reference information files; that is, "bind", "resolve", "exist?", and "delete".

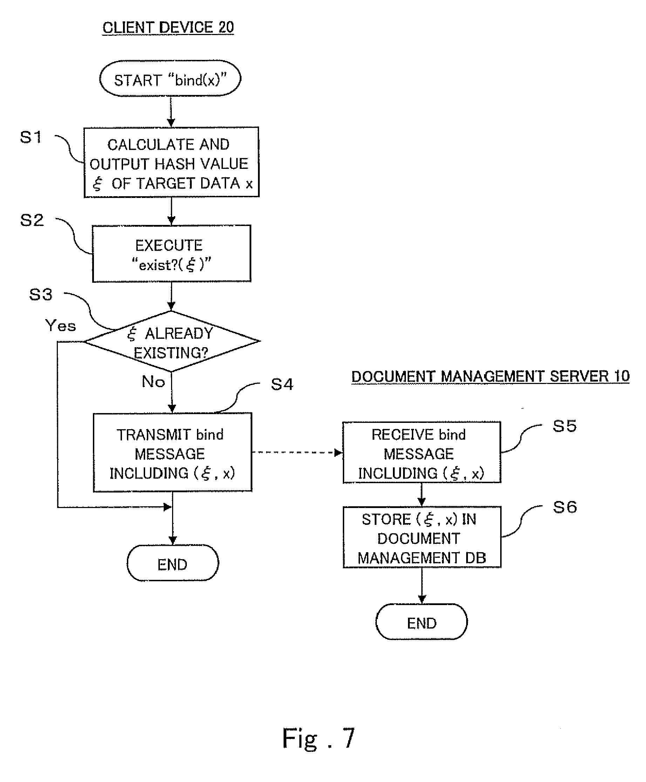

A flow of each of the basic processes will now be described. First, a flow of the "bind" process will be described by reference to Fig. 7. The "bind" process is a process to store an electronic document or its meta information from the client 20 to the server 10. This process has an input of data body x to be stored (electronic document or meta information) and an output of a hash value (context) ξ of the data x.

When the server IF section 218 of the client 20 is instructed to execute a "bind" process on data x (that is, bind (x)), the server IF section 218 instructs the hash calculator 216 to calculate a hash value of the data x, receives a calculation result ξ, and outputs the result ξ as the output data of the process (S1). The server IF section 218 also executes an "exist?" process on the hash value ξ (S2). The procedure for the "exist?" process will be described later in more detail. When the server IF section 218 obtains a result of the "exist?" process, the server IF section 218 determines whether or not ξ already exists on the server 10 (S3), and, when ξ does not exist, the server IF section 218 transmits a "bind" message to the server 10 including (ξ, x) (that is, a pair consisting of the data x and its hash value ξ) (S4). When, on the other hand, ξ exists, step S4 is skipped and the "bind" process is completed.

The client IF section 130 of the server 10 receives the "bind" message (S5), and stores the data x in the document management DB 110 with the hash value ξ as a key (S6).

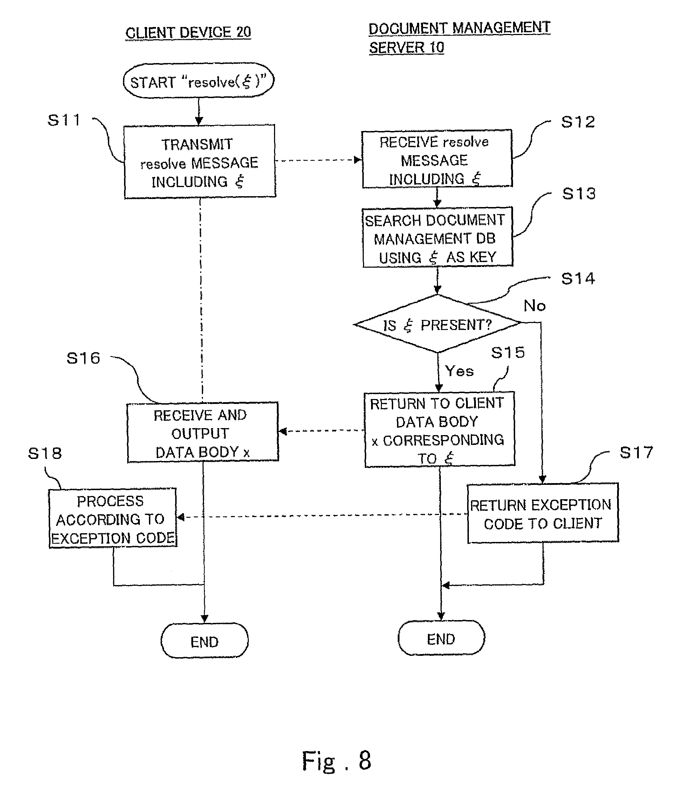

Next, a flow of a "resolve" process will be described with reference to Fig. 8. The "resolve" process is a process which has an input of a hash value ξ and determines data body x (electronic document or meta information) corresponding to ξ. The output of the process is the data body x.

When the server IF section 218 of the client 20 is instructed to execute a "resolve" process on a hash value ξ, the server IF section 218 transmits to the server 10 a "resolve" message including ξ as an argument (S11). At the server 10, the client IF section 130 receives the "resolve" message (S12), and the document management DB 110 is searched with the argument ξ of the message be used as a key (S13). AS a result of the search, a determination is made as to whether or not there is an entry in the document management DB 110 having ξ as a key (S14). When such an entry is found, the client IF section 130 returns to the client 20 the data body x in the entry corresponding to ξ (S15). The server IF section 218 of the client 20 receives the data body x returned from the server 10, and outputs the received data body as a result of the "resolve" process (S16). When, on the other hand, it is determined in step S14 that ξ does not exist, the client IF section 130 returns to the client 20 an exception code indicating that the key of inquiry does not exist (S17). When the server IF section 218 of the client 20 receives the exception code, the server IF section 218 executes a predetermined error process corresponding to the exception code (S18).

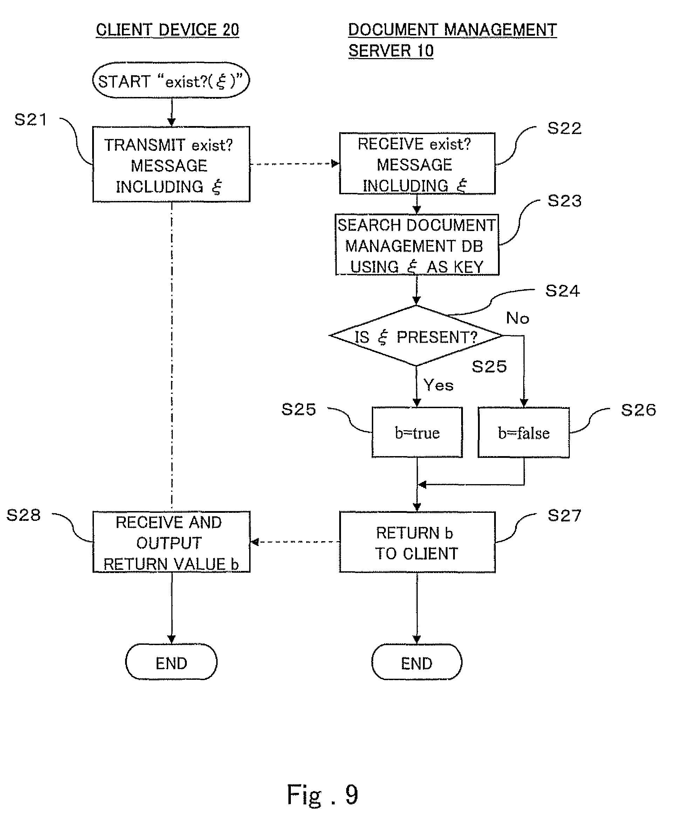

Next, a flow of the "exist?" process will be described with reference to Fig. 9. The "exist?" process has an input of a hash value ξ, is a process to determine whether or not data body x (electronic document or meta information) corresponding to ξ is already stored in the server 10, and has a Boolean value ("true" (existing) or "false" (not existing)) indicating the determination result as an output.

When the server IF section 218 of the client 20 is instructed to execute the "exist?" process with respect to a hash value ξ, the server IF section 218 transmits to the server 10 an "exist?" message including ξ as an argument (S21). At the server 10, the client IF section 130 receives the "exist?" message (S22), and the document management DB 110 is searched with the argument ξ of the message being used as a key (S23). As a result of the search, a determination is made as to whether or not there is an entry in the document management DB 110 having ξ as a key (S24). The client IF section 130 sets the value of the Boolean value b to "true" when it is determined that there is such an entry (S25) and sets the Boolean value b to "false" when there is no such an entry (S26). Then, the client IF section 130 returns the Boolean value to the client 20 (S27). The server IF section 218 of the client 20 outputs the return value b as a result of the "exist?" process (S28).

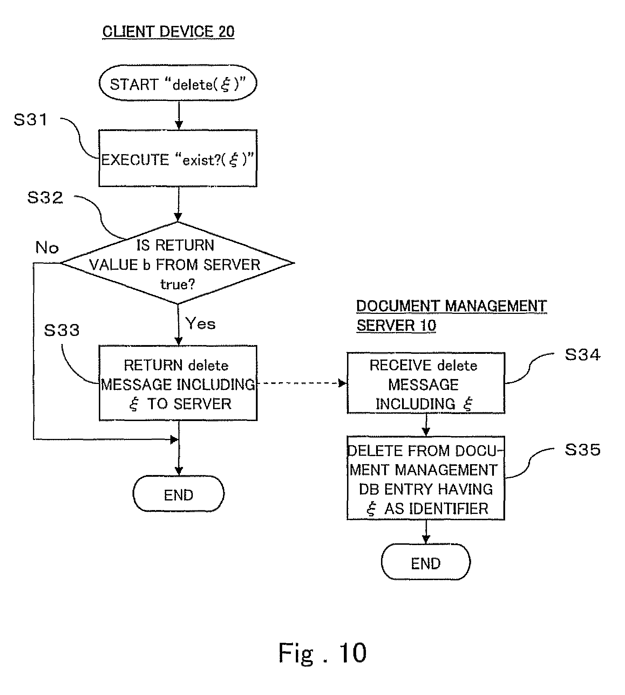

Next, a flow of the "delete" process will be described with reference to Fig. 10. The "delete" process has an input of a hash value ξ of data to be deleted and is a process to delete from the server 10 data x corresponding to the hash value ξ.

When the server IF section 218 of the client 20 is instructed to execute the "delete" process on a hash value ξ, the server IF section 218 executes the "exist?" process on the hash value ξ (S31). When a return value b is obtained as a result of the "exist?" process, the server IF section 218 determines whether or not the return value is "true" (S32). When it is determined that the return value is "true" (that is, ξ exists in the server 10), the server IF section 218 transmits to the server 10 a "delete" message including ξ as an argument (S33). When, on the other hand, it is determined that the return value is not "true", step S33 is skipped and the "delete" process is completed.

When the client IF section 130 of the server 10 receives the "delete" message from the client 20 (S34), an entry having the hash value as a key is deleted from the document management DB 110 (S35). In this manner, the data body x corresponding to the hash value ξ is deleted from the document management DB 110.

Procedures of the basic processes have been described in conjunction with the description of the server IF section 218. The present system can be put in order without the "delete" process among the basic processes. In addition, the "exist?" process is not an absolutely necessary process. The "exist?" process is provided in order to realize an advantage that no redundant data transfer is necessitated.

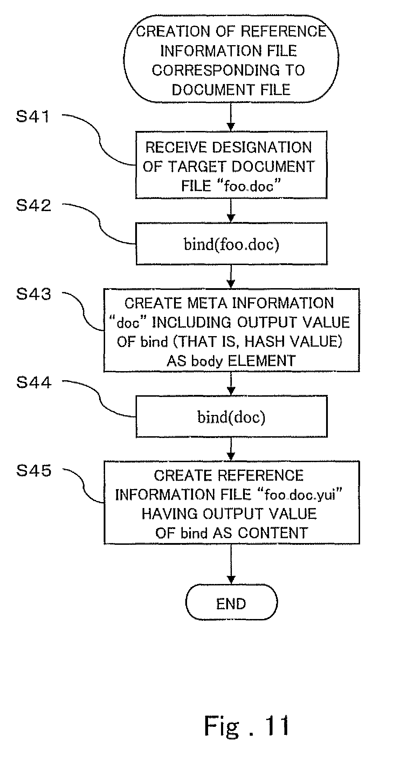

Referring back to Fig. 6, the reference information creator 220 will next be described. The reference information creator 220 creates a reference information file corresponding to an electronic document (file) or a folder in the file system 240 of the client 20. First, a procedure for creating a reference information file of an electronic document will be described with reference to Fig. 11.

When, for example, a user designates, through the UI section 212, a target electronic document and instructs creation of a reference information file for the electronic document (S41), the reference information creator 220 is started. Here, an example case will be described in which the file name of the designated target electronic document is "foo.doc". The reference information creator 220 requests the server IF section 218 to execute the "bind" process on the content "foo.doc" of the electronic document (S42). The reference information creator 220 then requests the meta information creator 214 to create meta information having the hash value which is the output of the "bind" process as a value of the <body> element (here, the meta information is named "doc" for description purposes) (S43). When the reference information creator 220 receives the meta information "doc" from the meta information creator 214, the reference information creator 220 requests the server IF section 218 to execute the "bind" process on the meta information "doc" (S44). Then, the reference information creator 220 creates a reference information file having the hash value which is the output of the "bind" process as its content (S45). In this example case, a file name in which a predetermined extension (in the example, ".yui") is added after the text string of the file name "foo.doc" of the original electronic document is assigned to the created reference information file. In other words, in the file name of the reference information file, information of the file name of the original electronic document is retained. The added extension of ".yui" is merely exemplary.

In the process of Fig. 11, because the "bind" process is executed, the electronic document designated as a target and its meta information is stored in the server 10. That is, the creation process of the reference information file may also be considered as a process to store a new electronic document in the server 10. In other words, the electronic document existing in the client 20 is incorporated into the system of the exemplary embodiment by the creation process of the reference information file. After the electronic document has been incorporated, the electronic document is circulated among users in the form of the reference information file.

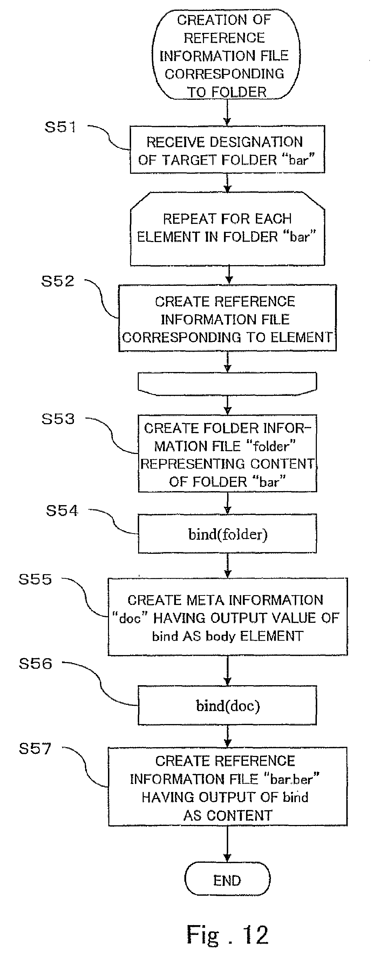

Next, a creation process of a reference information file corresponding to a folder will be described with reference to Fig. 12. When a user designates, through the UI section 212, a target folder (in the example case, an identification name of the folder is called "bar") and instructs creation of a reference information file (S51), the reference information creator 220 recursively executes a creation process of a reference information file corresponding to each element (that is, an electronic document or a folder) contained in the folder "bar" (S52). When the element is an electronic document, the reference information creator 220 executes the process of Fig. 11 on the electronic document. When the element is a folder, the reference information creator 220 executes a process of Fig. 12 on the folder. When reference information files for all elements in the folder "bar" are created, the reference information creator 220 creates a folder content description (in this example case, the description is named "folder" for description purposes) representing contents of the folder "bar" based on information of the reference information files (S53). The folder content description has already been described. The <name> element of each file is a file name of the reference information file for the file, and the <did> element is a hash value which is the content of the reference information file. The other elements are attribute information of the file managed by the file system 240. The reference information creator 220 requests the server IF section 218 to execute a "bind" process on the folder content description "folder" (S54). Then, the reference information creator 220 requests the meta information creator 214 to create meta information "doc" containing an output value of the "bind" process as a <body> element (the information is meta information of the folder "bar") (S55) and requests the server IF section 218 to execute the "bind" process on the meta information "doc" which is obtained as a result of the creation of the meta information (S56). The reference information creator 220 then creates a reference information file having an output value of the "bind" process as its content (S57). A file name in which a predetermined extension (in the example case, ".ber") is added after the name of the original folder "bar" is assigned to the created reference information file. The extension of ".ber" is merely exemplary.

Because the reference information file created through the above-described process is merely a file in the file system 240, all of the operations that can be executed for a file can be executed on the reference information file. It is also possible to attach the reference information file to an electronic mail and send the electronic mail. Regardless of the size of the data of the file or the folder, because the reference information file has a hash value as the content, the file size is a predetermined value which is very small. When, for example, SHA-256 is used, the file size of the reference information file is only 32 bytes. Therefore, even when a very large folder is to be handed to an acquaintance, the amount of data of the attachment file of the electronic mail does not need to be considered. In addition, even when the reference information file is transmitted outside of a domain covered by the present system, either erroneously or intentionally, because the server 10 cannot be accessed outside of the domain or the client 20 does not have the document processor 210 which handles the reference information file, the data body corresponding to the reference information file cannot be obtained.

Operations unique to the reference information file will now be described. The unique operations described below are executed under a management by the operation management unit 222.

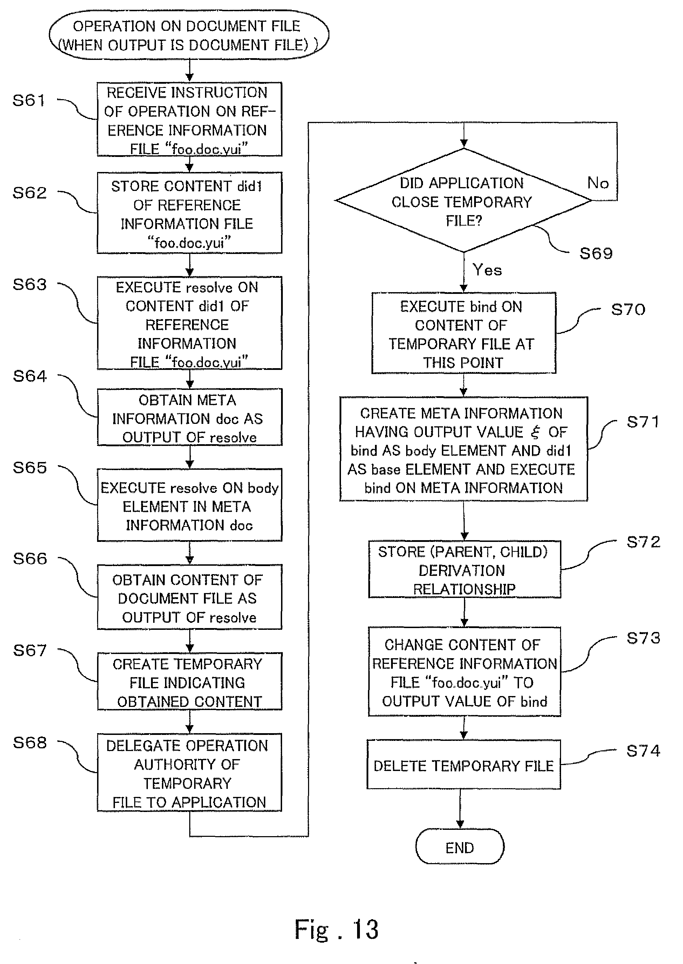

An example process when an operation of an electronic document by an application 230 is instructed will now be described with reference to Fig. 13. In this process, when a user instructs to the UI section 212 execution of an operation of a reference information file of a target electronic document (here, the file name is assumed to be "foo.doc.yui" for purpose of description) (S61), the operation management unit 222 records a document identifier did1 which is the content of the reference information file (S62). The instruction of operation in step S61 is realized by, for example, double-clicking an icon of the reference information file. The operation management unit 222 also requests the server IF section 218 to execute a "resolve" process on the document identifier did1 (S63) and obtains meta information "doc" as a result (S64). The operation management unit 222 requests the server IF section 218 to execute a "resolve" process on a value of the <body> element of the meta information (S65) and obtains content of the electronic document "foo.doc" as a result (S66). The operation management unit 222 creates a temporary file including the obtained file content (S67) and delegates the operation of the temporary file to the application 230 (S68). As the application 230 to which the operation is to be delegated, an application 230 corresponding to the extension of the electronic document (in the example, ".doc") may be selected. Then, the application 230 to which the operation is delegated opens the temporary file and receives the operation of the user. The operation management unit 222 waits for the application 230 to close the temporary file (S69). When the operation management unit 222 detects that the temporary file has been closed, the operation management unit 222 requests the server IF section 218 to execute a "bind" process on the content of the temporary file at that point (S70). When the content of the temporary file after the operation has been changed from the content of the original electronic document, the content of the temporary file is stored in the server 10. The operation management unit 222 requests the meta information creator 214 to create meta information having the output value ξ of the "bind" process as the <body> element and did1 described above as the <base> element. The operation management unit 222 then requests the server IF section 218 to execute a "bind" process on the meta information thus obtained (S71). A derivation relationship created in this process, (parent, child) = (context of new meta information, did1) is stored in the derivation relationship DB 120 (S72). Of the created meta information, the value of the <method> element may be, for example, "edited" when the content of the temporary file upon closing of the temporary file is changed from the content of the original electronic document and may be "read" when the content is not changed. The operation management unit 222 rewrites the content of the reference information file to be operated "foo.doc.yui" with the output value of the "bind" process (S73) and deletes the temporary file (S74). With the above-described process, the electronic document corresponding to the reference information file does not remain in the file system 240 of the client 20.

In this process, it is also possible to employ a configuration such that an access to the temporary file, the operation of which is delegated to the corresponding application, by applications other than the corresponding application is denied. This control may be realized by, for example, the operation management unit 222 monitoring the system calls from processes on the operation system, and denying a request when the operation management unit 222 detects that an access to the temporary file is requested by a process other than the corresponding application as a result of the monitoring. Alternatively, it is also possible to control the system such that files other than the temporary file, the operation of which is delegated to the corresponding application, cannot be created or written. This control may be realized, for example, by denying a request when the request for an operation on a file other than the temporary file is detected as a result of monitoring of system calls from the corresponding application to the operating system.

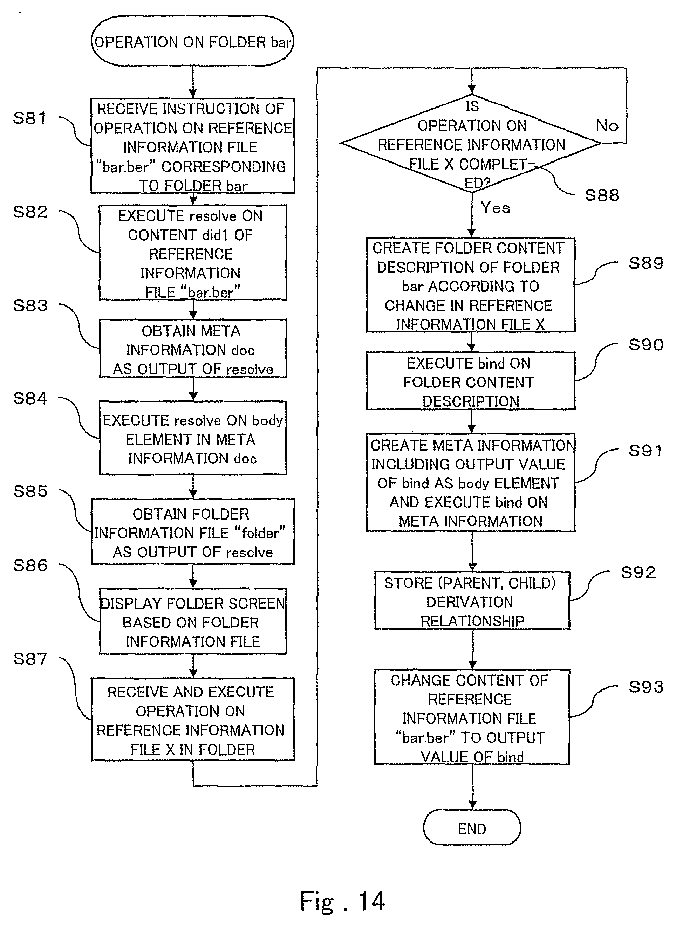

A process of the operation management unit 222 when an operation on a folder is instructed will now be described by reference to Fig. 14.

In this process, when a user instructs, through the UI unit 212, execution of an operation on a reference information file for a target folder (the file name of the reference information file is assumed to be "bar.ber" for purpose of description) (S81), execution of a "resolve" process on the identifier did1 included in the reference information file is requested to the server IF section 218 (S82) and meta information "doc" of the folder "bar" is obtained as a result (S83). The operation management unit 222 requests the server IF section 218 to execute a "resolve" process on a value of the <body> element of the meta information (S84) and obtains the folder content description "folder" of the folder "bar" as a result (S85). The operation management unit 222 creates a folder screen indicating the content of the folder "bar" based on the obtained folder content description "folder", and displays the folder screen (S86). The folder screen may be, for example, a display in a list of icons of folders and electronic documents within the folder "bar". Because the folder content description "folder" includes information of the reference information files of electronic documents and folders in the folder "bar" and of their identifiers (<did> elements), a folder screen in which icons representing the reference information files of the electronic documents and folders are displayed in a list can be created. The icon of the reference information file represents a corresponding electronic document or corresponding folder. For example, it is possible to display an icon of a reference information file in correspondence to a name of the corresponding electronic document or corresponding folder.

The operation management unit 222 receives an instruction from a user for an operation on the reference information file displayed on the folder screen and executes the operation (S87). Here, when the reference information file designated by the user as a target of operation corresponds to an electronic document, the operation management unit 222 executes the process of Fig. 13 with the reference information file as a target. When the reference information file designated by the user as the target of operation corresponds to a folder, the operation management unit 222 recursively executes the process of Fig. 14 with the reference information file as a target. In the illustrated example, it is assumed that an operation on a reference information file X is instructed in step S87. The operation management unit 222 monitors completion of the operation on the reference information file X (S88). When the operation is completed, the value of the reference information file X has been changed from the original value. The operation management unit 222 creates a folder content description of the folder "bar" according to the change of value of the reference information file X (S89). When an operation is applied on the reference information file X, the identifier "did" which is the content of the reference information file X changes from the original and information of the update time and most recent access time also changes. Thus, in step S89, a folder content description reflecting these changes is created. At the time of completion of operation on the reference information file X, the information, such as the identifier and update time, of the elements other than the reference information file X on the folder screen is not changed. The operation management unit 222 requests the server IF section 218 to execute a "bind" process on the folder content description created in step S89 (S90), creates meta information of the folder "bar" including an output value of the "bind" process as the <body> element, and requests the server IF section 218 to execute a "bind" process on the meta information (S91). In addition, derivation relationship created in this process, (parent, child) = (context of new meta information, did1), is stored in the derivation relationship DB 120 (S92). The operation management unit 222 then replaces the content of the reference information file "bar.ber" with the output value of the "bind" process (S93).

In the above, an operation on the reference information file corresponding to a folder has been described, It is also possible to assign the above-described processes to designation by UCN (Universal Character Name) such as "C:/DocumentsandSettings/terao/MyDocuments.ber/bar/sample.txt" by implementing a namespace extension of shell. In this example case, the description following "MyDocuments.ber" is not made up of a folder or a file on the file system, but rather, is made up of a reference information file indicating a virtual folder and electronic document.

By employing such a configuration, when, for example, an install directory of a complex application is to be transported, the transport is facilitated by creating the reference information file of the directory. For example, an install directory of operation environments of TeX includes various applications and library, and many files and folders of various class files and font data, and the amount of data may reach, for example, several hundreds of megabytes. The reference information file of the directory, on the other hand, may be data of 32 bytes when, for example, SHA-256 is used. When a user who does not usually use the operation environment of TeX must temporarily use the operation environment of TeX, it is possible to transmit the folder reference of the install directory through mail. In this manner, operations similar to Thinclient can be realized. In this method of use of the application, because the owner of the folder reference can obtain the usage history of the file as will be described later, the application can be easily charged on the basis of usage.

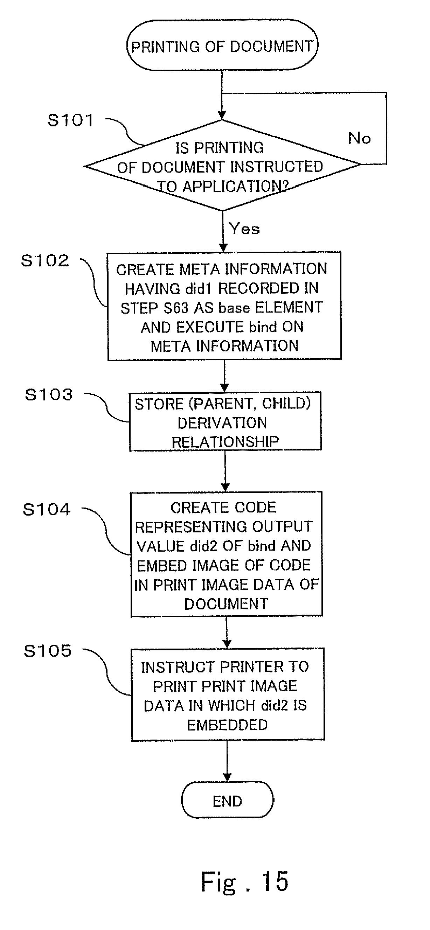

Next, a case is considered in which an electronic document is printed while the electronic document is opened via the reference information file. An example process of printing is shown in Fig. 15. The process of Fig. 15 is executed by the paper document management unit 224.

The reference information file is opened in step S61 of the process of Fig. 13, and the operation on the temporary file having the content of the electronic document corresponding to the reference information file is delegated to the application 230 in step S68. The paper document management unit 224 monitors whether or not there is an instruction of printing of the temporary file by the user to the application 230 until the temporary file is closed (S101). When the paper document management unit 224 detects a print instruction, the paper document management unit 224 creates meta information including the identifier did1 recorded in step S63 of Fig. 13 as the <base> element and requests the server IF section 218 to execute a "bind" process on the meta information (S102). In addition, a derivation relationship created in this process, (parent, child) = (context of new meta information, did1), is stored in the derivation relationship DB 120 (S103). Here, the <body> element of the meta information may be empty. Alternatively, because the application 230 or the printer driver creates, when printing is instructed, print image data describing the print image corresponding to the temporary file at that point, it is also possible to execute a "bind" process on the print image data and use the output value of the "bind" process as the <body> element of the meta information. The print image data may be in any data format which can be handled by the printer 250, and may be data descried in a page description language or a bitmap image. The values of the <user> element, <time> element, <filename> element, etc. of the meta information can be obtained from the operating system. The value of the <method> element in this case is "printed". The paper document management unit 224 creates a code image indicating an output value did2 of the "bind" process and embeds an image of the code image in the print image data of the temporary file (S104). Here, the code image may be a text string. Alternatively, the code image may be a code such as a one-dimensional barcode, a two-dimensional barcode, or a QR code (registered trademark). The code image may be embedded in the print image as watermarking data. The value did2 functions as the document identifier for the printed paper document. Meta information corresponding to the document identifier did2 includes document identifier did1 of the electronic document which is the original electronic document of the paper document as the <base> element. The paper document management unit 224 sends to the printer 250 the print image data in which the identifier did2 is embedded and instructs the printer 250 to print the image (S105).

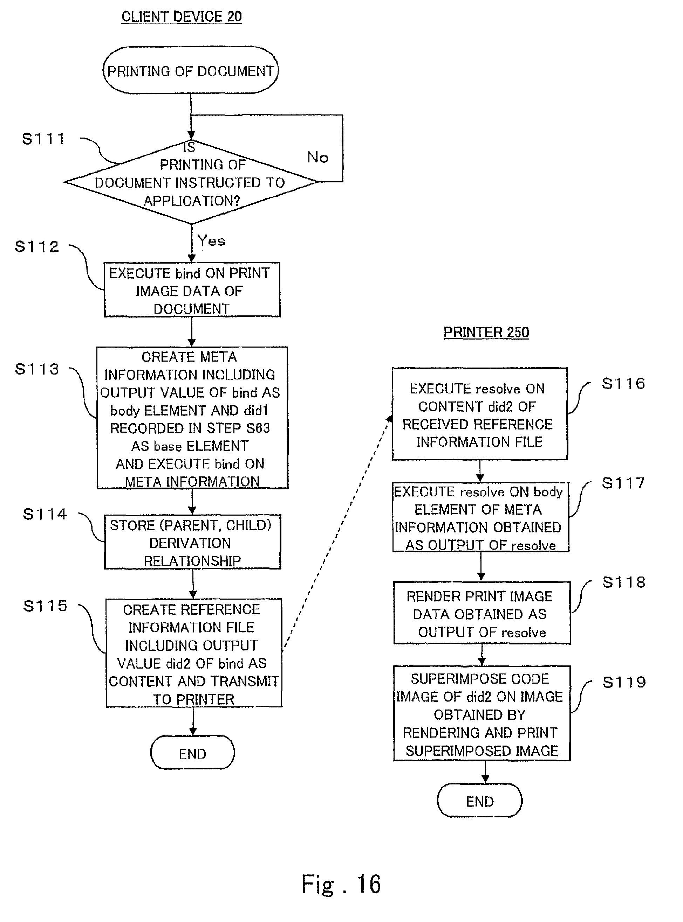

Next, an example process during printing will be described with reference to Fig. 16. The process of Fig. 16 is executed by the paper document management unit 224. An operation on a temporary file representing a target electronic document is delegated to an application 230 in step S68 of Fig. 13. The paper document management unit 224 then monitors whether or not there is an instruction of printing of the temporary file by the user to the application 230 until the temporary file is closed (S111). When the paper document management unit 224 detects a print instruction, the paper document management unit 224 requests the server IF section 218 to execute a "bind" process targeted on the print image data of the temporary file created by the application 230 or the printer driver (S112). Then, the paper document management unit 224 creates meta information including an output value of the "bind" process as the <body> element and the identifier did1 recorded in step S63 of Fig. 13 as the <base> element, and requests the server IF section 218 to execute a "bind" process on the meta information (S113). The derivation relationship created in this process, (parent, child) = (context of new meta information, didl), is stored in the derivation relationship DB 120 (S114). Then, the paper document management unit 224 creates a reference information file having an output value did2 of the "bind" process as content, and transmits the reference information file to the printer 250 (S115). In the example case, the printer 250 has functions similar to those of the document processor 210. The printer 250 executes a "resolve" process on the content did2 of the received reference information file (S116). As a result, meta information corresponding to the identifier did2 is provided from the server 10 to the printer 250. The printer 250 executes a "resolve" process on the <body> element of the meta information (S117). As a result, print image data stored in the server 10 in step S112 are provided from the server 10 to the printer 250. The printer 250 renders the print image data obtained in the process of step S117 to create raster image data which can be used for printing (S118), superimposes the code image representing the identifier did2 on the raster image data, and prints the image after the superimposition on a medium (S119).

With the use of the processes of Fig. 16, an amount of data transmission from the client 20 instructing printing of the document to the printer 250 can be reduced. When the same document is to be printed plural times or when the print image data is structuralized; for example, when the print image data is represented as an XML document and DomHash is used as the document identifier of the XML document, the amount of data transmission can be further reduced, because re-transmission of document component for which printing is already instructed can be avoided. In addition, by configuring the printer 250 to have a cache, the amount of data transmission from the server 10 to the printer 250 can be reduced. In addition, it is also possible to employ a configuration in which the interface to the cache is limited to "resolve". With this configuration, no user having malicious intent and not knowing the context of the data stored in the cache (hash value) can obtain the data on the cache.

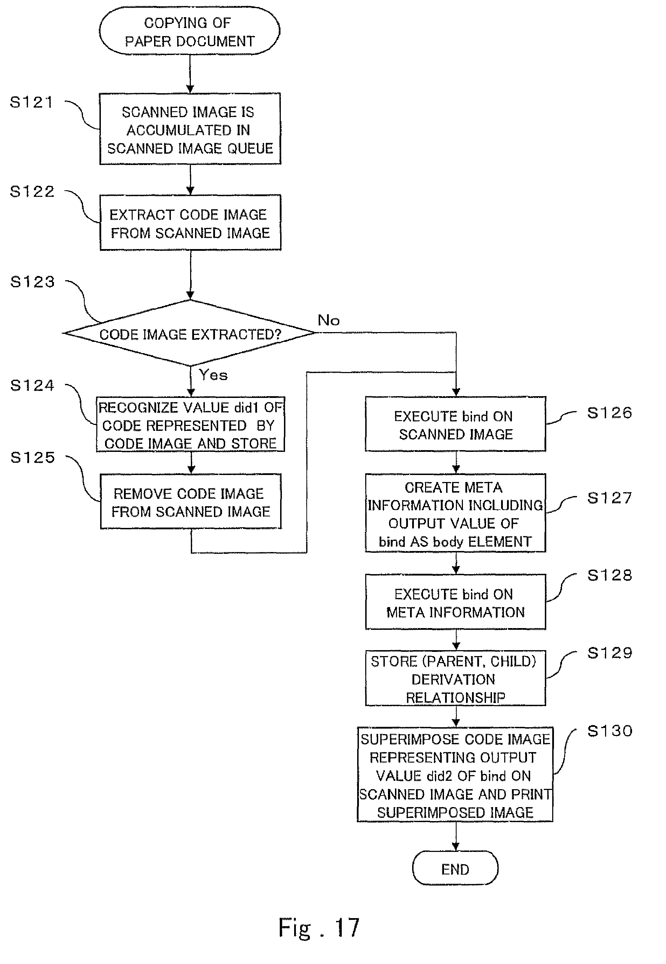

Next, a flow of a process when a paper document is to be copied in the client 20 will be described by reference to Fig. 17. This process is executed by the paper document management unit 224 (refer to Fig. 6).

When a user sets a paper document on the scanner 260 and instructs copying to the information processor 210, the scanner 260 reads the paper document, and a scanned image obtained as a result of the reading is accumulated in a scanned image queue (not shown) secured on a memory provided in the information processor 200 (S121). The paper document management unit 224 attempts to extract a code image of a document identifier from the scanned image (S122). When a code image of a document identifier is embedded in the paper document according to the method of the exemplary embodiment, the paper document management unit 224 can extract the code image in accordance with the method. The paper document management unit 224 determines whether or not a code image is extracted (S123), and, when a code image is extracted, the paper document management unit 224 decodes the code image and recognizes its value did1 (S124). This is the document identifier of the paper document. Then, the paper document management unit 224 removes the code image from the scanned image (S125), and requests the server IF section 218 to execute a "bind" process on the scanned image after the code image is removed (S126). Then, meta information including an output value of the "bind" process as the <body> element and the document identifier did1 of the original paper document as the <base> element is created (S127). The meta information is meta information of the copy to be output, and includes the document identifier of the original paper document as information of the parent and a hash value (identifier) of the scanned image after the code image is removed as information indicating the copy image. In addition, the value of the <method> element of the meta information is "copied". The values of history items related to the operation such as the time and the name of user instructing the copying process are obtained from the operating system and incorporated as elements such as the <time> element and the <user> element. The paper document management unit 224 requests the server IF section 218 to execute a "bind" process on the meta information (S128). A derivation relationship created in this process, (parent, child) = (context of new meta information, did1), is stored in the derivation relationship DB 120 (S129). Then, the paper document management unit 224 superimposes a code image representing an output value did2 of the "bind" process on the scanned image after the code image is removed, and instructs the printer 250 to print the image after the superimposition (S130). The value did2 functions as the document identifier of the copied paper document.

When it is determined in step S123 that no code image is extracted from the scanned image, the processes of steps S124 and S125 are skipped, and the process jumps directly to step S126. In this case, the <base> element of the meta information created in step S127 would be empty. The other processes may be similar to those in the case when the code image is extracted.

According to the copying process described above, the document identifier embedded in the original paper document is replaced with a new document identifier determined on the basis of meta information indicating the information of the copying operation. Therefore, the meta information of individual copying operation can be stored even for a chain of multiple copy processes, and the individual copying can be traced at a later time.

When a paper document obtained by printing an electronic document stored in the server 10 is to be copied, it is possible to identify the original electronic document by going back the derivation relationship based on the document identifier embedded in the paper document. A writing (annotation) on the image of the original electronic document can be separated on the basis of a difference between the image of the identified original electronic document and an image of the copied paper document. When the paper document is copied in the present system, an image obtained by reading a paper document is stored in the server 10. Therefore, when a paper document A is obtained by copying a certain paper document and a document in which an annotation is added to the paper document A is further copied, the image of the paper document A at the time of copying and output is stored in the server 10 (the stored image data may be considered an electronic document). Thus, it is possible to separate, as the content of the annotation, a difference of an image which is read during copying of the annotated paper document A and an image of the paper document A at the time of copying. In such a case, by setting the image on which the annotation content is superimposed to the image of the original electronic document as the image of the document to be output in the copying operation, the separation can be realized even for a chain of multiple copying processes.

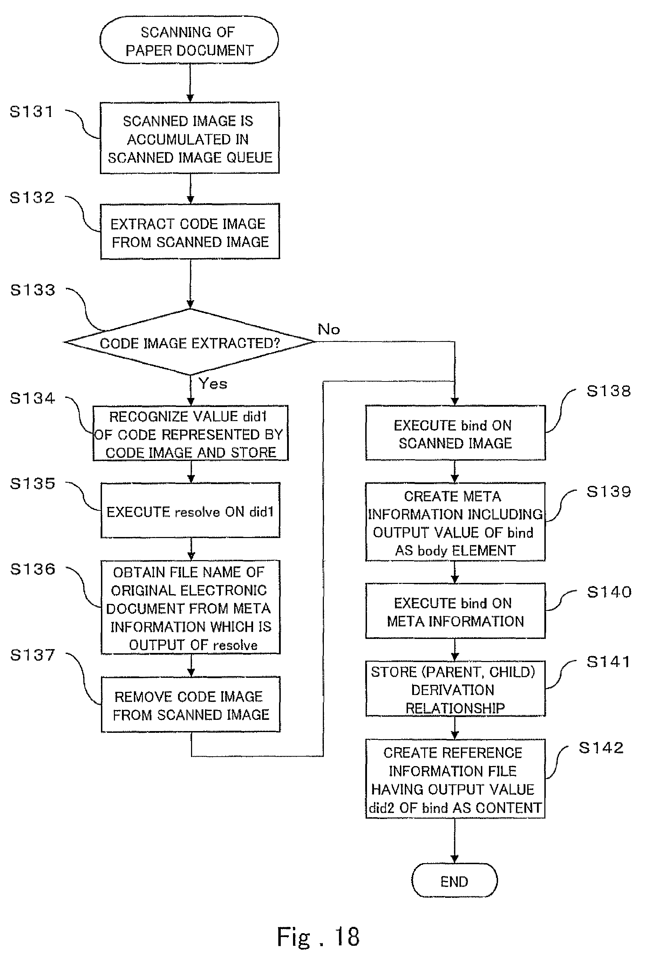

Next, a flow of a process when a paper document is to be scanned (read) by the client 20 will be described with reference to Fig. 18. This process is executed by the paper document management unit 224.

When a user sets a paper document on the scanner 260 and instructs the information processor 200 to scan, the scanner 260 reads the paper document, and a scanned image obtained as a result is accumulated in a scanned image queue secured on the memory provided in the information processor 200 (S131). The paper document management unit 224 attempts to extract a code image of a document identifier from the scanned image (S132). The paper document management unit 224 determines whether or not a code image is extracted (S133), and, when a code image is extracted, the paper document management unit 224 decodes the code image and recognizes the document identifier did1 of the paper document (S134). Then, the paper document management unit 224 requests the server IF section 218 to execute a "resolve" process on the document identifier (S135), and obtains a file name of the original electronic document (value of the <filename> element) from the meta information of the paper document obtained as a result (S136). The paper document management unit 224 removes the code image from the scanned image (S137) and requests the server IF section 218 to execute a "bind" process on the scanned image after the code image is removed (S138). Then, meta information including an output value of the "bind" process as the <body> element and the document identifier did1 of the paper document as the <base> element is created (S139). The meta information is meta information of the scanned image file to be created, and includes the document identifier of the original paper document as information of the parent and a hash value (identifier) of the scanned image after the code image is removed as information indicating the scanned image. In addition, a value of the <method> element of the meta information is "scanned", Values of history items related to the operation such as time and name of user instructing the scanning process are obtained from the operating system and incorporated as elements such as the <time> element and the <user> element. The paper document management unit 224 requests the server IF section 218 to execute a "bind" process on the meta information (S140). The derivation relationship created in this process, (parent, child) = (context of new meta information, did1), is stored in the derivation relationship DB 120 (S141), Then, a reference information file having an output value did2 of the "bind" process as content is created (S142). Here, it is also possible to create the file name of the scanned image file on the basis of the file name of the original electronic document obtained in step S136. For example, it is possible to set, as a file name of the scanned image, a name in which an extension (for example, ".tif") corresponding to the file format of the scanned image file is added to the file name of the original electronic document . In addition, it is possible to set the file name of the reference information file to a name in which an extension (for example, ".yui") indicating that the file is reference information of the electronic document is added to the file name of the scanned image file. The reference information file is stored in a folder, for example, in which the scanned image file is stored.

When in step S133 it is determined that no code image is extracted from the scanned image, the processes of steps S134 - S137 are skipped, and the process jumps directly to step S138. In this case, the <base> element of the meta information created in step S139 would be empty. In addition, the file name may be attached to the scanned image file in accordance with a predetermined rule. For example, it is possible to use a file name in which an extension corresponding to a format of the scanned image file is added to a text string in which the user name of the user instructing the scanning process and the time of the scan operation are arranged in order. For the reference information file corresponding to the scanned image file, there may be used a file name in which an extension which indicates that the file is reference information of an electronic document is added to the text string of the file name of the scanned image file. Other processes may be similar to those in the case when the code image is extracted.

Normally, the scanned image file created in the scan process is stored in a particular folder which is preset. Therefore, in general, each user must access the particular folder in order to obtain the scanned image file. In the exemplary embodiment, on the other hand, because the user can refer to a tree structure of derivation relationship of documents, a user who has a reference information file of the scanned paper document or of an electronic document which is an ancestor of the scanned paper document can obtain the scanned image file through the server 10 without explicitly accessing the particular folder. By not making public the folder in which the scanned image is stored, it is possible to reduce a chance of leakage of the scanned image.

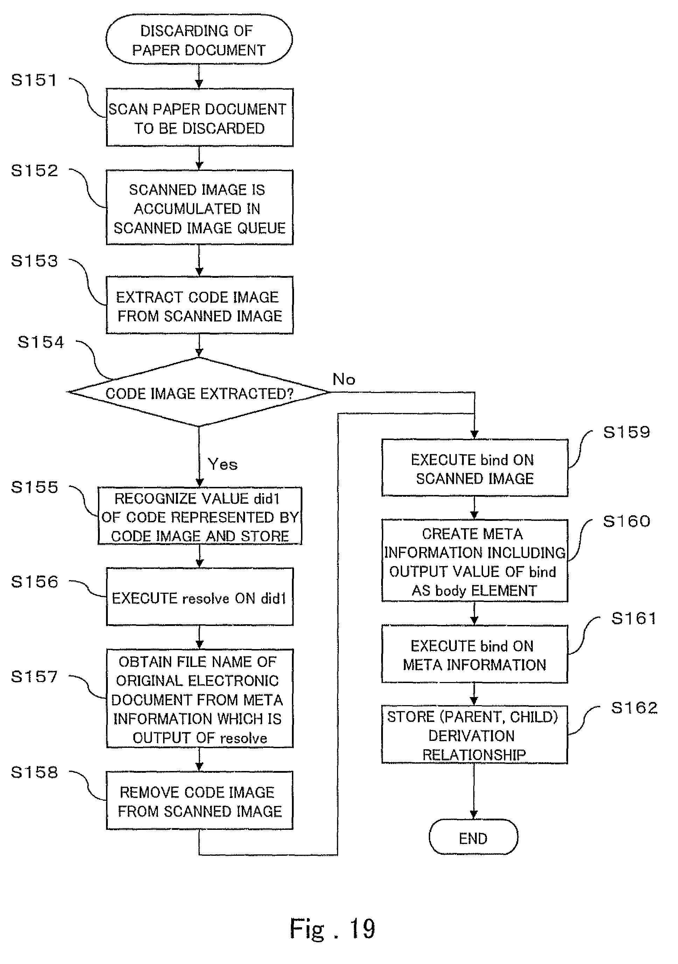

Next, a flow of processes when a paper document is to be discarded by the shredder with scanner 270 of the client 20 will be described with reference to Fig. 19. This process is executed by the paper document management unit 224.

The shredder with scanner 270 has a scanner at, for example, an entrance from which paper is to be introduced, and reads an image of the paper with the scanner before the paper is shredded.

When a user introduces a paper document to the shredder with scanner 270, the scanner reads the paper document (S151) and a scanned image obtained as a result is accumulated in a scanned image queue secured on the memory provided in the information processor 200 (S152). The paper document management unit 224 attempts to extract a code image of a document identifier from the scanned image (S153). The paper document management unit 224 determines whether or not a code image is extracted (S154), and, when a code image is extracted, decodes the code image and recognizes the document identifier did1 of the paper document (S155). Then, the paper document management unit 224 requests the server IF section 218 to execute a "resolve" process on the document identifier (S156) and obtains a file name of the original electronic document (value of <filename> element) on the basis of the meta information of the paper document obtained as a result of the resolve process (S157). The paper document management unit 224 removes the code image from the scanned image (S158), and requests the server IF section 218 to execute a "bind" process on the scanned image after the code image is removed (S159). Then, meta information having an output value of the "bind" process as the <body> element and the document identifier did1 of the paper document as the <base> element is created (S160). The meta information is the meta information of the discarded paper document, and includes the document identifier of the original paper document as information of the parent and a hash value (identifier) of the scanned image after the code image is removed as information indicating an image of the discarded paper document. In addition, a value of the <method> element of the meta information is "shredded". The paper document management unit 224 requests the server IF section 218 to execute a "bind" process on the meta information (S161). The derivation relationship created in this process, (parent, child) = (context of new meta information, did1), is stored in the derivation relationship DB 120 (S162).

When it is determined in step S154 that no code image is extracted from the scanned image, the processes of steps S155 - S158 are skipped, and the process jumps directly to step S159. In this case, the <base> element of the meta information created in step S160 would be empty. Other processes may be similar to those in the case when the code image is extracted.

As described, the paper document management unit 224 has functions of print management, scan management, management of copying of paper documents, and management of discarding of paper documents.

In the above-described example, a case is exemplified in which the document identifier is printed on a paper document as a code image. When the paper document has an RFID tag, the document identifier may be written on the RFID tag. In this case, the printer 250 may have a writer to write on the RFID tag, the scanner 260 may have a reader which reads the RFID tag, and the shredder may have an RFID tag reader in place of the scanner.

When the RFID tag is used in this manner, a security gate device may be provided in order to detect movement of a paper document. The security gate device reads the document identifier from the RFID tag of a paper document passing through the gate and creates meta information having the document identifier as the <base> element. The <method> element of the meta information indicates an operation of "gate passing". Alternatively, it is also possible to record a more detailed operation such as, for example, entrance of the paper document to the gate or exiting of the same from the gate. The <time> element can be obtained from the clock of the security gate device. By providing a function to read an ID card of a user in the security gate device, it is possible to record the read user ID to the <user> element. The security gate device executes a "bind" process on the created meta information. The derivation relationship created in this process, (parent, child) = (context of new meta information, did1), is stored in the derivation relationship DB 120. In this manner, meta information regarding gate passage is accumulated in the server 10.

Next, a process to prohibit access to the electronic document using the reference information file will be described. This process is executed by the access prohibition processor 226 (refer to Fig. 6).

When a user designates, through the UI section 212, a reference information file and instructs prohibition of access, the access prohibition processor 226 extracts a document identifier "did" in the reference information file and requests the server IF section 218 to execute a "delete" process on "did". In this manner, meta information corresponding to the document identifier "did" is deleted from the document management DB 110.

By employing such a configuration, it becomes no longer possible for an owner of the reference information file corresponding to a document derived from the document corresponding to the deleted reference information file to access documents prior to the node corresponding to the deleted document in the tree structure of the derivation relationship.

It is also possible to recursively request the server IF section 218 to execute a "delete" process for document identifiers "did" of documents deriving from the deleted reference information file. With this process, it becomes impossible to access the entire subtree having, as a root, the document to which access is prohibited. With such a configuration, it is possible, for example, to collectively prohibit access to documents that are spread through a particular information circulation path.

An operation using a "delete" process, however, results in severe side-effects (for example, the owner of the reference information file can prohibit access to a document independent of the intent of the creator of the reference information file), and, thus, a limitation can be imposed on the user who can execute such an operation. For example, a configuration may be employed in which only a user who created the reference information file can instruct prohibition of the access to the reference information file. Such a limitation may be realized, for example, by providing a user authentication mechanism.

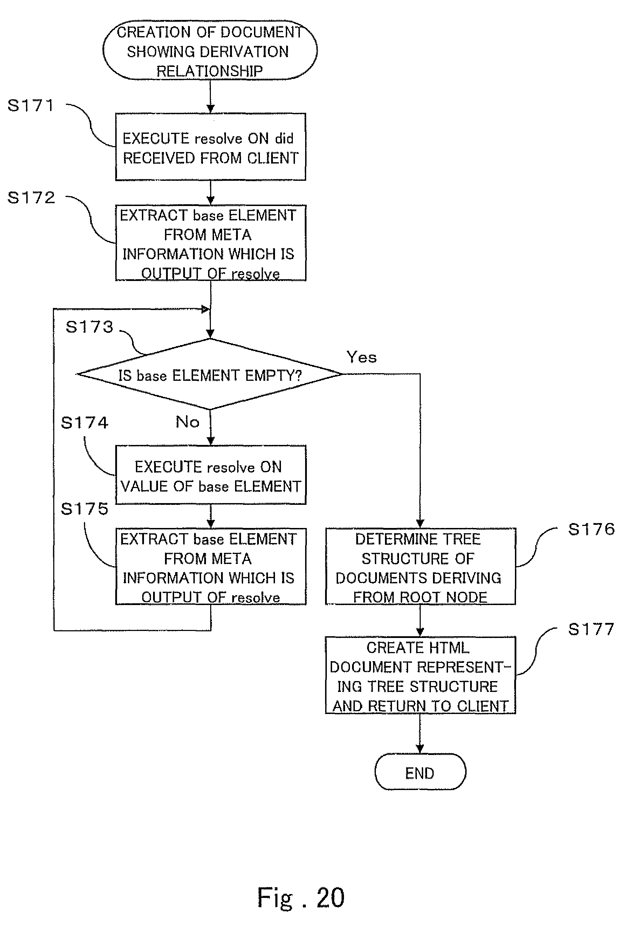

Next, a process for displaying the derivation relationship will be described with reference to Fig. 20. This process is executed by the derivation relationship display processor 228 of the client 20 and the derivation relationship display creator 140 of the server 10.

When a user designates, through the UI section 212, a target reference information file and instructs display of derivation relationship, the derivation relationship display processor 228 extracts a document identifier "did" included in the reference information file and transmits to the server 10 a derivation relationship display request including did as an argument. The derivation relationship display creator 140 of the server 10 receiving the request executes a process shown in Fig. 20.

The derivation relationship display creator 140 executes a "resolve" process on the document identifier did received from the client 20 (S171) and extracts a <base> element from meta information obtained as a result of the "resolve" process (S172). As a result of the extraction, a determination is made as to whether or not the <base> element is empty (S173), and, when the <base> element is not empty, a "resolve" process is executed on the value of the <base> element (S174), a <base> element is extracted from meta information obtained as a result of the "resolve" process (S175), and a determination is made as to whether or not the extracted <base> element is empty (S173). The steps S174 and S175 are a process to go back the derivation relationship by one generation. The steps S173 - S175 are repeated until the determination result of step S173 becomes positive (Yes). The determination result of the step S173 becoming positive means that a root node of the tree structure has been reached as a result of going back the tree structure of the derivation relationship from the client document identifier "did". In this case, the derivation relationship display creator 140 determines the overall tree structure made of the descendant nodes deriving from the root node by referring to the derivation relationship DB 120 (S176). Then, the derivation relationship display creator 140 creates derivation relationship display data representing the overall tree structure, and returns the derivation relationship display data to the client 20 (S177). The derivation relationship display data may be created as an HTML document. The derivation relationship display processor 228 of the client 20 renders the display data to create a tree display image of the derivation relationship and displays the tree display image on a screen.

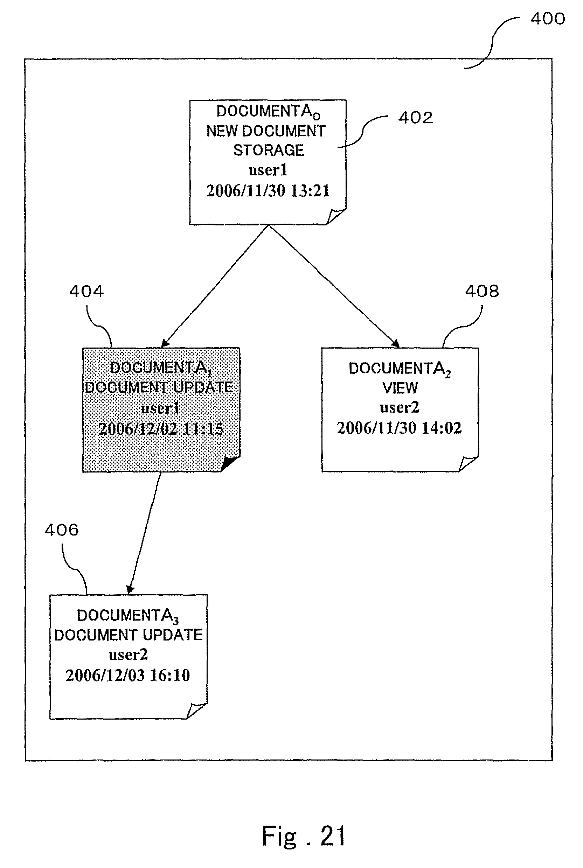

An example of a display image 400 represented by the derivation relationship display data is schematically shown in Fig. 21. The display image 400 is an example when a reference information file corresponding to a document A₁ is designated and display of the derivation relationship is instructed. The derivation relationship display creator 140 goes back the derivation relationship from the document A₁, to reach a root node which is document A₀, and determines documents A₁ and A₂ which are derived from the document A₀ and a document A₃ which is derived from the document A₁ on the basis of the derivation relationship DB 120. Then, the derivation relationship display creator 140 arranges icons 402 - 408 of the documents in accordance with the derivation relationship and creates a tree structure display in which the derivation relationship is displayed connected by edges. For the icons 402 - 408, it is possible to display the history information such as the file name, type of operation when the document is created, identification name of the user instructing the operation, time of operation, etc. Such history information can be obtained from the meta information corresponding to each document. The icon 404 corresponding to the reference information file instructed as a target may be displayed in a display format which can be distinguished from the other icons (such as, for example, with a different color).

A structure and a process of an exemplary embodiment have been described. In the above-described example structure, the number of the document management server 10 is one, but it is also possible to form a distributed server network with multiple document management servers 10. In this case, it is not necessary that a client 20 can refer to all servers 10 in the distributed server network. This case corresponds to, for example, a case in which a portion of the network is placed on an intranet and cannot be reached from a client present on the side of the Internet, and a case in which the network is logically limited through a method in which, for example, the server authenticates a client and only responds to a permitted client.

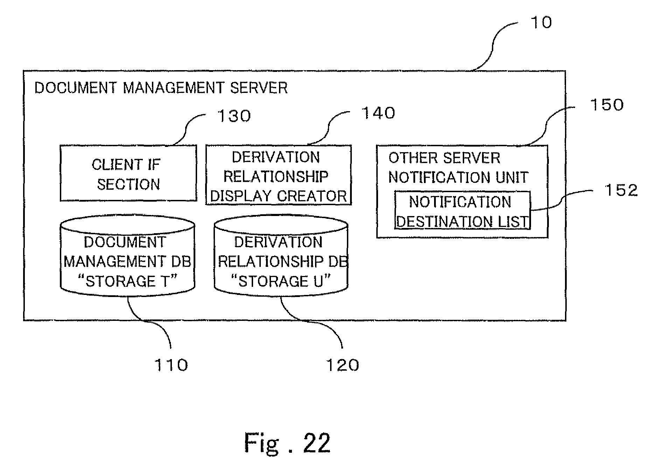

An example of such a distributed structure will now be described. As shown in Fig. 22, each of document management servers 10 which are members of a distributed network has another server notification unit 150 in addition to the elements provided to the single-structure server exemplified in Fig. 2. The other server notification unit 150 stores a notification destination list 152. In the notification destination list 152, identifiers of the servers which are to be notified are registered. In the following description, the document management server 10 is simply referred to as a "server" for the purpose of description.

In this example structure, a set of servers is assumed to be Σ and a server identifier idₛ is correlated to each server SεΣ ("SεΣ" means that S is a member of a set Σ). Each server S stores a set Fₛ of server identifiers as the notification destination list 152. When idₛ, εFₛ (that is, a server S' is included in the notification destination list 152 of the server S) and servers S and S' are nodes of a graph, a directed edge from the node S to the node S' can be defined. When the nodes and directed edge are defined in this manner, a directed graph representing the set Σ of servers can be obtained. By suitably setting the notification destination list, it is possible to set the graph for the set Σ of servers to be a directed acyclic graph (DAG).

When the server S receives a "bind" message (ξ, x) from a client, the server S stores the data x and forwards a "bind" message (ξ, idₛ) to the servers included in the notification destination list 152. As the identifier idₛ of the server S, for example, an address of the server S on the network may be used. Even when the identifier idₛ of the server S is not the address itself of the server S, provision, on the network, of a mechanism to resolve the address of the server S from the identifier idₛ can be easily realized by known techniques.

When the server S' receives the "bind" message (ξ, idₛ) from the server S, the server S' stores idₛ in correlation to ξ and forwards the "bind" message (ξ, idₛ) to servers included in its notification destination list. Because Σ is a finite set and is a DAG, the above-described operation always terminates.

By employing a similar structure for the "resolve" message, it is possible to make the entirety of connected components of the graph Σ including the server to which request is transmitted from the client to operate as a single virtual server.

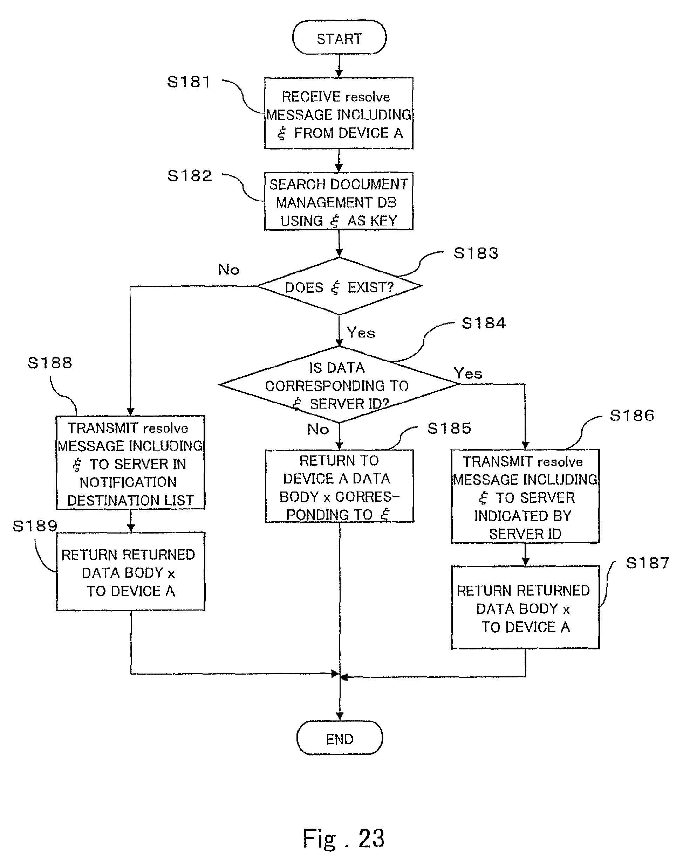

Fig. 23 shows an example process of the server when a "resolve" message is received. In this example process, when a "resolve" message for a hash value ξ is received from a device A (S181), the server searches its document management DB 110 while using ξ as a key (S182). Here, the device A may be a client 20 or another server. The server determines whether or not data corresponding to the key has been found through the search of step S182 (S183). When the data are found, the server determines whether the data corresponding to the key ξ is a server identifier or registered data body x (electronic document or meta information) (S184). When the data corresponding to the key ξ is data body x, the server returns the data body x to the device A (S185). When, on the other hand, the data corresponding to the key ξ is a server identifier, the server transmits a "resolve" message for the hash value ξ to the server corresponding to the server identifier (S186) and waits for a response to the message. The response includes data body x corresponding to ξ. When the server receives the response, the server returns the data body x to the device A (S187).

When it is determined in step S183 that the key ξ is not present in the document management DB 110 of the server, the other server notification unit 150 transmits a "resolve" message for the hash value ξ to the servers registered in the notification destination list 152 (S188) and receives a response to the message. The server then returns to the device A the data body x included in the response (S189).

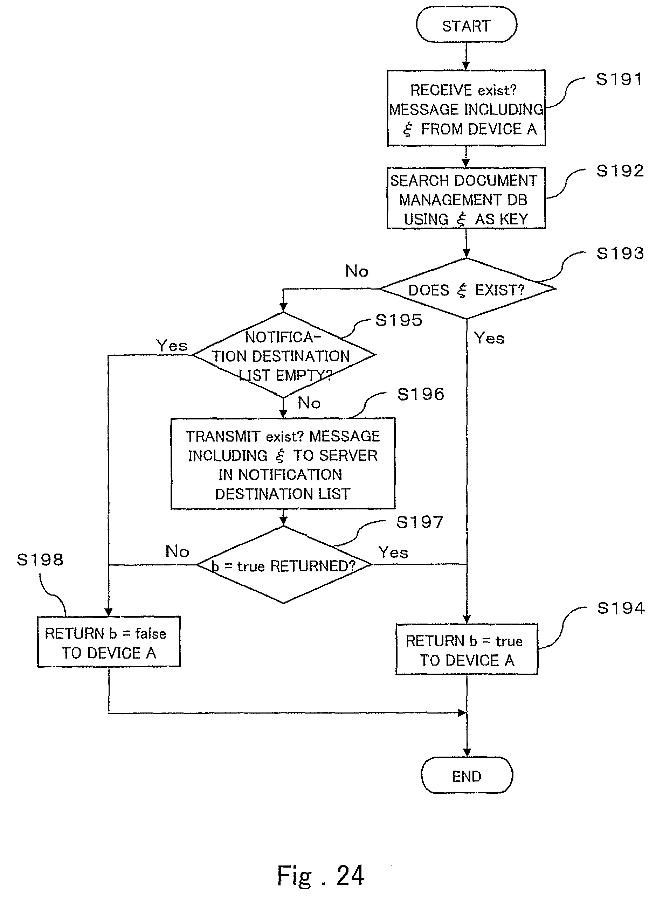

The "exist?" message may be processed in a manner similar to that in which the "resolve" message is processed. Specifically, as shown in Fig. 24, for example, when the server receives an "exist?(ξ)" message from the device A (S191), the server searches its document management DB 110 for key ξ (S192) and determines whether or not the key ξ is found (S193) When the key is found, a Boolean value b = true is returned to the device A (S194). When the key ξ does not exist in the document management DB 110 of the server, the other server notification unit 150 checks the notification destination list 152 (S195). When the notification destination list is not empty, the other server notification unit 150 transmits an "exist?(ξ)" message to the notification destination servers in the list and waits for a response from the servers (S196). Then, the other server notification unit 150 determines responses from the servers (S197). When, as a result of the determination, it is found that there is a response including a Boolean value b = true, the server returns the Boolean value b = true to the device A (S194). When responses from all notification destination servers are Boolean value b = false, the server returns the Boolean value b = false to the device A (S198). When in step S195 the notification destination list 152 is determined to be empty, the server returns the Boolean value b = false to the device A (S198).

A process of a server receiving a "delete(ξ)" message may be, for example, the following process. In this case, if there is an entry of the key ξ in the document management DB 110 of the server, the server deletes the entry. Regardless of whether or not there is an entry of the key ξ, the other server notification unit 150 transmits a "delete (ξ" message to the servers registered in the notification destination list 152.

In the distributed server structure exemplified above, the topology of the network can be freely changed within a range in which the graph Σ satisfies the requirement of DAG. In addition, when two sub-graphs are not interconnected, the two sub-graphs can be connected by adding, to the notification destination list of a leaf of one of the sub-graphs, a node of the other sub-graph. With such a connection process, multiple distributed server networks which exist independently from each other in different domains may be merged a posteriori, to form a larger distributed server network.

As another example of a distributed server structure, a known distributed hash table by Chord (http://pdos.csail.mit.edu/chord) may be used. More specifically, the distributed server network may be constructed as a structured overlay network represented by a distributed hash table. This may be considered as a P2P network structure on the server side.

A system of the exemplary embodiment has been described. In the above-described example structures, the client 20 and the server 10 are described as being present on separate host computers. Alternatively, the client 20 and the server 10 may exist on the same host (a structure known as a P2P network structure).

In the above-described example configuration, the meta information for electronic document and folder are described in XML. This configuration, however, is merely exemplary, and the meta information does not depend on the description format.

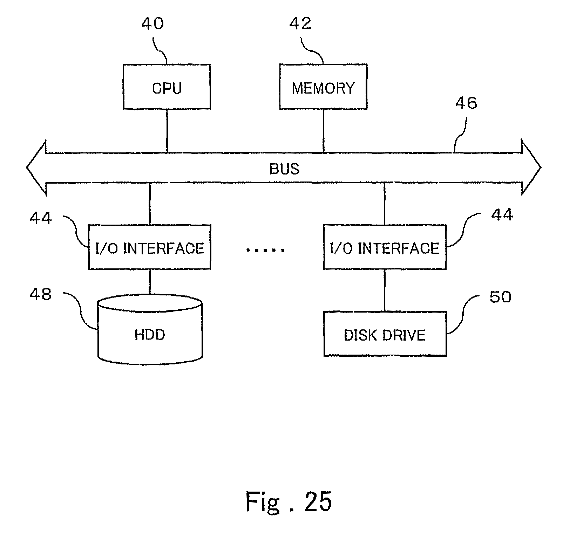

In the above-described exemplary embodiment, the server 10 is typically realized by a general-purpose computer executing a program describing the function or process of the above-described units. The computer may have, as hardware, a circuit structure in which a CPU (Central Processing Unit) 40, a memory (primary storage) 42, various I/O (input/output) interfaces 44, etc. are connected via a bus 46, as shown in Fig. 25. A hard disk drive 48 or a disk drive 50 which reads a transportable non-volatile recording medium of various standards such as a CD, a DVD, and a flash memory may be connected via the I/O interface 44 to the bus 46. The drive 48 or 50 functions as an external storage device for the memory. A program describing the processes of the exemplary embodiment is stored in a fixed storage device such as the hard disk drive 48 via a recording medium such as a CD and a DVD or via a network, and is installed in the computer. By the program stored in the fixed storage device being read into the memory and executed by the CPU, the processes of the exemplary embodiment are realized. The client 20 may be formed in a similar manner from computer hardware.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The exemplary embodiments were chosen and described in order to best explain the principles of the invention and its practical applications, thereby enabling others skilled in the art to understand the invention for various embodiments and with various modifications as are suited to the particular use contemplated. It is intended that the scope of the invention be defined by the following claims and their equivalents.

## Claims

1. A document management system comprising:
a document storage that stores an electronic document and a content identifier of the electronic document in correspondence to each other, the content identifier of the electronic document being a hash value of a content of the electronic document;
a management information storage that stores management information, which includes a content identifier of an electronic document and a management identifier of a parent document of the electronic document, and a management identifier of the electronic document in correspondence to each other, the management identifier of the electronic document being a hash value of the management information;
an obtaining unit that obtains, on the basis of an obtaining instruction designating a management identifier, management information corresponding to the management identifier from the management information storage and obtains from the document storage a first electronic document corresponding to a content identifier included in the obtained management information; and
a print management unit that registers, in response to a print instruction for the first electronic document obtained by the obtaining unit, management information, of a medium document which is a printed result of the print instruction, which includes a management identifier of the first electronic document and a management identifier of the medium document in correspondence to each other, the management identifier of the medium document being a hash value of the management information of the medium information, and that writes the management identifier of the medium document on the medium document.

2. The document management system according to Claim 1, further comprising:
a registering unit that registers, when an operation is executed on the first electronic document obtained by the obtaining unit and a second electronic document is created, the second electronic document in the document storage in correspondence to a content identifier of the second electronic document and that registers management information including the content identifier of the second electronic document and the management identifier of the first electronic document in the management information storage in correspondence to a management identifier of the second electronic document which is a hash value of the management information.

3. The document management system according to Claim 1, wherein
the print management unit registers print image data indicating an image to be printed on the medium in the document storage in correspondence to a content identifier which is a hash value of the print image data, and registers management information which further includes the content identifier in the management information storage as the management information of the medium document.

4. The document management system according to Claim 1, further comprising:
a read management unit that recognizes, in response to execution of a read operation on a medium document, a management identifier written on the medium document, creates management information including the management identifier of the medium document as management information of an electronic document obtained as a result of the read operation, registers the electronic document in the document storage in correspondence to a content identifier which is a hash value of the electronic document, and registers the management information in the management information storage in correspondence to a management identifier which is a hash value of the management information.

5. The document management system according to Claim 1, further comprising:
a copy management unit that recognizes, in response to execution of a copy operation on a first medium document, a management identifier written on the first medium document, creates management information including a management identifier of the first medium document as management information of a second medium document obtained as a result of the copy operation, registers the management information in the management information storage in correspondence to a second management identifier which is a hash value of the management information, and writes the second management identifier on the second medium document.

6. The document management system according to Claim 5, wherein
the copy management unit registers image data obtained by reading the first medium document in the document storage in correspondence to a content identifier which is a hash value of the image data, and registers management information, which further includes the content identifier, in the management information storage as the management information of the second medium document.

7. The document management system according to Claim 1, further comprising:
a discard management unit that recognizes, in response to execution of a discard operation of a medium document, a management identifier written on the medium document, creates management information including the management identifier of the medium document as management information indicating discarding of the medium document, and registers the management information in the management information storage in correspondence to a management identifier which is a hash value of the management information.

8. The document management system according to Claim 7, wherein
the discard management unit registers image data obtained by reading the medium document in the document storage in correspondence to a content identifier which is a hash value of the image data, and registers management information, which further includes the content identifier, in the management information storage as the management information of the medium document.

9. A program causing a computer to execute a process for document management, the process comprising:
obtaining, in response to an obtaining instruction designating a management identifier, management information corresponding to the management identifier designated in the operation instruction from a management information storage which stores management information, which includes a content identifier of an electronic document and a management identifier of a parent document of the electronic document and a management identifier of the electronic document in correspondence to each other, the management identifier of the electronic document being a hash value of the management information;
obtaining a first electronic document corresponding to a content identifier included in obtained management information from a document storage which stores an electronic document and a content identifier of the electronic document in correspondence to each other, the content identifier of the electronic document being a hash value of the electronic document; and
registering, in response to a print instruction of the obtained first electronic document, management information including the management identifier of the first electronic document as management information of a medium document which is a printed result of the print instruction in the management information storage in correspondence to a management identifier of the medium document which is a hash value of the management information.

10. A document processing client device which communicates with a document management server comprising a document storage that stores an electronic document and a content identifier of the electronic document in correspondence to each other and a management information storage that stores management information which includes a content identifier of an electronic document and a management identifier of a parent document of the electronic document, and the management identifier of the electronic document in correspondence to each other, and which provides a document processing function to a user, the document processing client device comprising:
an obtaining unit that obtains, in response to an obtaining instruction designating a management identifier, management information corresponding to the management identifier from the document management server, and obtains from the document management server a first electronic document corresponding to a content identifier included in the obtained management information; and
a print management unit that creates, in response to a print instruction of the first electronic document obtained by the obtaining unit, management information, which includes a management identifier of the first electronic document, as management information of a medium document which is a printed result of the print instruction, calculates a hash value of the management information as a management identifier of the medium document, registers the calculated management identifier and the management information of the medium document in the document management server in correspondence to each other, and writes the management identifier of the medium document on the medium document.

11. The document processing client device according to Claim 10, further comprising:
a content registering unit that calculates, when an operation is executed on the first electronic document obtained by the obtaining unit and a second electronic document is created, a hash value of the second electronic document as a content identifier of the second electronic document, and registers the calculated content identifier and the second electronic document in the document management server in correspondence to each other; and
a management information registering unit that creates, as management information of the second electronic document, management information including the content identifier of the second electronic document and a content identifier of the first electronic document, calculates a hash value of the management information as a management identifier of the second electronic document, and registers the calculated management identifier and the management information of the second electronic document in the document management server in correspondence to each other.

12. A program causing a computer to execute a process to communicate with a document management server system comprising a document storage that stores an electronic document and a content identifier of the electronic document in correspondence to each other and a management information storage that stores management information, which includes a content identifier of an electronic document and a management identifier of a parent document of the electronic document, and a management identifier of the electronic document in correspondence to each other and to provide a document processing function to a user, the process comprising:
obtaining, in response to an obtaining instruction designating a management identifier, management information corresponding to the management identifier from the document management server;
obtaining from the document management server a first electronic document corresponding to a content identifier included in the obtained management information;
creating, in response to a print instruction of the obtained first electronic document, management information including a management identifier of the first electronic document as management information of a medium document which is a printed result of the print instruction;
calculating a hash value of the management information as a management identifier of the medium document;
registering the calculated management identifier and management information of the medium document in the document management server in correspondence to each other; and
writing the management identifier of the medium document on the medium document.

13. A document management server device comprising:
a document storage that stores an electronic document and a content identifier of the electronic document in correspondence to each other, the content identifier of the electronic document being a hash value of a content of the electronic document;
a management information storage that stores management information, which includes a content identifier of an electronic document and a management identifier of a parent document of the electronic document, and a management identifier of the electronic document in correspondence to each other, the management identifier of the electronic document being a hash value of the management information;
an identifier resolving unit that provides, when a resolving request presenting a management identifier is received from a document processing client device, management information corresponding to the management identifier from the management information storage to the document processing client device, and provides to the document processing client device, when a resolving request presenting a content identifier is received from the document processing client device, an electronic document corresponding to the content identifier; and
a medium information storage processor that stores, when a registering request including management information and a management identifier of a medium document is received from the document processing client device, the management information in the management information storage in correspondence to the management identifier.

14. The document management server device according to Claim 13, further comprising:
a content storage processor that stores, when a registering request including an electronic document and a content identifier is received from the document processing client device, the electronic document in the document storage in correspondence to the content identifier; and
a management information storage processor that stores, when a registering request including management information and a management identifier of an electronic document is received from the document processing client device, the management information in the management information storage in correspondence to the management identifier.

15. The document management server device according to Claim 14, further comprising:
a list-recording unit that records a list of an identifier of a second document management server device to be notified;
a transmitting unit that transmits, when a registering request including an electronic document and a content identifier is received from a document processing client device, a registering request, which includes the content identifier and an identifier of the document management server device, to the second document management server device recorded in the list-recording unit, and transmits, when a registering request including management information and a management identifier is received from the document processing client device, a registering request, which includes the management identifier and the identifier of the document management server device, to the second document management server device recorded in the list-recording unit;
a first registration processor that registers, when a registering request including a content identifier and an identifier of a third document management server device is received from the third document management server device, the content identifier and an identifier of the third document management server device in the document storage and forwards the registering request to the second document management server device recorded in the list-recording unit;
a second registration processor that registers, when a registering request including a management identifier and the identifier of the third document management server device is received from the third document management server device, the management identifier and the identifier of the third document management server device in the management information storage and forwards the registering request to the second document management server device recorded in the list-recording unit;
a first resolve processor that obtains, when a resolving request presenting a content identifier is received and information stored in the document storage in correspondence to the content identifier is an identifier of a document management server device, an electronic document corresponding to the content identifier from the document management server device corresponding to the identifier, and returns the obtained electronic document to a device issuing the resolving request; and
a second resolve processor that obtains, when a resolving request presenting a management identifier is received and information stored in the management information storage in correspondence to the management identifier is an identifier of a document management server, management information corresponding to the management identifier from a document management server device corresponding to the identifier, and returns the obtained management information to a device issuing the resolving request.

16. A program causing a computer to execute a process for document management, the process comprising:
obtaining, when a resolving request presenting a management identifier is received from a document processing client device, management information corresponding to the management identifier from a management information storage that stores management information, which includes a content identifier of an electronic document and a management identifier of a parent document of the electronic document, and a management identifier of the electronic document in correspondence to each other, the management identifier of the electronic document being a hash value of the management information, and providing the obtained management information to the document processing client device;
obtaining, when a resolving request presenting a content identifier is received from the document processing client device, an electronic document corresponding to the content identifier from a document storage that stores an electronic document and a content identifier of the electronic document in correspondence to each other, the content identifier of the electronic document being a hash value of the electronic document, and providing the obtained electronic document to the document processing client device; and
storing, when a registering request including management information and a management identifier of a medium document is received from the document processing client device, the management information in the management information storage in correspondence to the management identifier.
